# EUROPÄISCHE PATENTANMELDUNG

(11) **EP 3 916 870 A1**
(43) Veröffentlichungstag der Anmeldung: **01.12.2021**
(21) Anmeldenummer: 20210495.6
(22) Anmeldetag: 27.11.2020
(51) Int. Cl.: H01M 10/052, H01M 10/0583, H01M 10/0587, H01M 50/103, H01M 50/536, H01M 50/553

(54) **ENERGIESPEICHERELEMENT MIT PRISMATISCHEM GEHÄUSE**

(30) Priorität: 29.05.2020 EP 20177599; 09.06.2020 EP 20179112; 19.06.2020 EP 20181273; 07.09.2020 EP 20194940; 16.09.2020 EP 20196526
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Patentanwaltskanzlei Cartagena

(57) **Zusammenfassung**

Ein Energiespeicherelement (100) umfasst eine Mehrzahl von Anoden (120) und Kathoden (130). Die Anoden (120) und die Kathoden (130) umfassen jeweils einen Stromkollektor (115, 125) mit einem Hauptbereich, der mit einer Schicht aus dem jeweiligen Elektrodenmaterial (123, 155) beladen ist, sowie einen freien Randstreifen (117, 121), der sich entlang eines Rands (115a, 125a) der Stromkollektoren erstreckt und der nicht mit Elektrodenmaterial beladen ist. Die Anoden (120) und Kathoden (130) liegen gestapelt vor und bilden einen Verbundkörper (105), wobei die Anoden (120) und die Kathoden (130) durch Separatoren (118, 119) oder Schichten aus einem Festkörperelektrolyten getrenntsind. Hierbei ragen die freien Randstreifen (121) der Anodenstromkollektoren (115) aus einer Seite des Verbundkörpers (105) und die freien Randstreifen (117) der Kathodenstromkollektoren (125) aus einer anderen Seite des Verbundkörpers (105) heraus. Der Verbundkörper (105) ist von einem prismatischen Gehäuse umschlossen. Das Energiespeicherelement weist mindestens ein metallisches Kontaktelement (102, 112) auf, das mit den freien Randstreifen (117, 121) der Anodenstromkollektoren (115) und/oder der Kathodenstromkollektoren (125) durch Verschweißung oder Verlötung verbunden ist.

## Beschreibung

Die nachstehend beschriebene Erfindung betrifft ein Energiespeicherelement mit prismatischem Gehäuse.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung wer-den an der negativen Elektrode durch einen Oxidationsprozess Elektronen freigesetzt. Hieraus resultiert ein Elektronenstrom, der von einem externen elektrischen Verbraucher abgegriffen wer-den kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich gleichzeitig durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden oftmals in Form von sogenannten Kompositelektroden eingesetzt, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. In einigen Ausführungsformen kann die negative Elektrode auch auf metallischem Lithium basieren. Als Aktivmaterialien für die positive Elektrode können beispielsweise Lithium-Metalloxide wie Lithiumcobaltoxid (LiCoO₂) und Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. In der Regel ist der Stromkollektor beidseitig mit einer Schicht aus einem Aktivmaterial bedeckt. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Zur Herstellung sekundärer Lithium-Ionen-Zellen können die positiven und negativen Elektroden mit einem oder mehreren Separatoren zu einem Verbundkörper kombiniert werden. In der Regel umfasst der Verbundkörper mindestens die Sequenz "positive Elektrode / Separator / negative Elektrode". Die Verbundkörper können aberauch mehrals nureine positive und eine negative Elektrode umfassen. So ist es möglich, dass ein Verbundkörper mehrere positive und negative Elektroden in alternierender Abfolge, so dass benachbarte Elektroden stets eine entgegengesetzte Polarität aufweisen, umfasst, wobei zwischen benachbarten Elektroden jeweils ein Separator angeordnet ist. Bei der Bildung der Verbundkörper kann es gegebenenfalls vorteilhaft sein, die Elektroden und Separatoren unter Druck, gegebenenfalls durch Lamination oder mittels Verklebung, miteinander zu verbinden.

In Ausführungsformen sekundärer Lithium-Ionen-Zellen mit einer auf metallischem Lithium basierenden Anode kann auch ein Verbundkörper gebildet werden, der an Stelle einer negativen Elektrode zunächst nur einen Stromkollektor umfasst. In diesen Fällen ist es vorgesehen, dass Lithium beispielsweise über die Kathode in die Zelle eingebracht wird und sich beim ersten Laden auf dem Stromkollektor abscheidet.

Der Verbundkörper umfasst mit den Elektroden und dem oder den Separatoren bereits die strukturellen Hauptkomponenten der Zelle. Um ihn in eine funktionsfähige elektrochemische Zelle zu überführen, ist es in den meisten Fällen die Zudosierung eines flüssigen Elektrolyten erforderlich, der die Elektroden und insbesondere auch den Separator durchtränkt.

Alternativ ist es auch möglich, bei der Herstellung des Verbundkörpers an Stelle des Separators zwischen den Elektroden einen Festkörperelektrolyten anzuordnen, der eine intrinsische Ionenleitfähigkeit aufweist und nicht mit einem flüssigen Elektrolyten getränkt werden muss. In diesem Fall handelt es sich bei dem Verbundkörper unmittelbar nach seiner Bildung um eine funktionsfähige elektrochemische Zelle.

Als flüssiger Elektrolyt wird für Lithium-Ionen-Zellen in der Regel eine Lösung mindestens eines Lithiumsalzes in einem organischen Lösemittelgemisch verwendet.

Zur Bildung einer Lithium-Ionen-Zelle mit zylindrischer Grundform können bandförmige Elektroden und Separatoren in einer Wickelmaschine zu einem spiralförmigen Wickel verarbeitet werden. Eine solcher Wickel passt perfekt in ein zylindrisches Gehäuse.

Für einige Anwendungen werden allerdings Energiespeicherelemente mit prismatischem Gehäuse benötigt. Zur Herstellung solcher Energiespeicherelemente können entgegengesetzt gepolte Elektroden mit polygonaler Grundfläche gestapelt werden, so dass ein Verbundkörper mit prismatischer Grundform entsteht. Innerhalb des Stapels sind dabei entgegengesetzt gepolte Elektroden in der Regel durch Separatoren oder Schichten eines Festkörperelektrolyten voneinander getrennt, so dass kein unmittelbarer Kontakt zwischen entgegengesetzt gepolten Elektroden besteht. Ein aus rechteckigen Zellen gebildeter kubischer Verbundkörper passt beispielsweise perfekt in ein entsprechendes kubisches Gehäuse. Innerhalb des Gehäuses können die Elektroden elektrisch miteinander verschaltet werden. Üblicherweise werden gleich gepolte Elektroden innerhalb des Gehäuses an einen gemeinsamen Stromleiter gekoppelt, der entweder elektrisch mit einem der Gehäuseteile verbunden oder aber über eine entsprechende Durchbrechung aus dem Gehäuse herausgeführt ist.

Für Anwendungen im Automobilbereich, für E-Bikes oder auch für andere Anwendungen mit hohem Energiebedarf wie z.B. Elektrowerkzeuge werden Energiespeicherelemente mit möglichst hoher Energiedichte benötigt, die gleichzeitig in der Lage sind, mit hohen Strömen beim Laden und Entladen belastet zu werden. Moderne Lithium-Ionen-Zellen können bereits eine Energiedichte von bis zu 270 Wh/kg erreichen. Diese Energiedichte wird allerdings nur als Zwischenschritt angesehen. Vom Markt werden bereits Energiespeicherelemente mit noch sehr viel höheren Energiedichten gefordert.

Bei der Entwicklung verbesserter Energiespeicherelemente sind allerdings noch andere Faktoren zu beachten als nur die Energiedichte. Außerordentlich wichtige Parameter sind der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zellen essentiell sein kann. Beim Schnellladen von Zellen können aufgrund von Leistungsverlusten Wärmestaus in den Zellen und Elektrodenstapeln auftreten, die zu massiven thermomechanischen und elektrochemischen Belastungen führen können. Das Risiko besteht verstärkt dort, wo der erwähnte gemeinsame Stromleiter an die Elektroden gekoppelt ist, da beim Laden oder Entladen eine Erwärmung lokal an solchen separaten Stromleitern auftreten kann. Vor allem wirken unmittelbar in der Nähe der Stromleiter größere thermomechanische Belastungen auf die jeweilige Elektrode als entfernt von den Stromleitern.

In der WO 2017/215900 A1 sind Zellen beschrieben, deren Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann deshalb in der Folge sehr viel besser abgefangen werden.

### AUFGABE UND LÖSUNG

Der vorliegenden Erfindung liegt die Aufgabe zugrunde, Energiespeicherelemente mit prismatischem Gehäuse bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Eigenschaften bezüglich ihres Innenwiderstands und ihrer passiven Entwärmungsfähigkeiten besitzen. Weiterhin sollen sich die Energiespeicherelemente auch durch eine verbesserte Herstellbarkeit und Sicherheit auszeichnen.

Diese Aufgabe wird durch das Energiespeicherelement mit den Merkmalen des Anspruchs 1 gelöst. Bevorzugte Ausgestaltungen des Energiespeicherelements ergeben sich aus den abhängigen Ansprüchen.

Das erfindungsgemäße Energiespeicherelement zeichnet sich stets durch eine Kombination der folgenden Merkmale a. bis i. aus:
a. Es umfasst eine Mehrzahl von Anoden und Kathoden.
b. Die Anoden umfassen jeweils einen Anodenstromkollektor.
c. die Anodenstromkollektoren weisen jeweils
   - einen Hauptbereich, der mit einer Schicht aus negativem Elektrodenmaterial beladen ist, sowie
   - einen freien Randstreifen, der sich entlang eines Rands der Anodenstromkollektoren erstreckt und der nicht mit dem negativen Elektrodenmaterial beladen ist, auf.
d. Die Kathoden umfassen jeweils einen Kathodenstromkollektor.
e. Die Kathodenstromkollektoren weisen jeweils
   - einen Hauptbereich, der mit einer Schicht aus positivem Elektrodenmaterial beladen ist, sowie
   - einen freien Randstreifen, der sich entlang eines Rands der Kathodenstromkollektoren erstreckt und der nicht mit dem positiven Elektrodenmaterial beladen ist, auf.
f. Die Anoden und die Kathoden liegen gestapelt vor und bilden einen Verbundkörper, wobei die Anoden und die Kathoden in dem Verbundkörper durch Separatoren oder Schichten aus einem Festkörperelektrolyten getrennt sind.
g. Der Verbundkörper ist von einem prismatischen Gehäuse umschlossen.
h. Die freien Randstreifen der Anodenstromkollektoren ragen aus einer Seite des Verbundkörpers und die freien Randstreifen der Kathodenstromkollektoren ragen aus einer anderen Seite des Verbundkörpers heraus.
i. Das Energiespeicherelement weist mindestens ein metallisches Kontaktelement auf, das mit den freien Randstreifen der Anodenstromkollektoren und/oder den freien Randstreifen der Kathodenstromkollektoren durch Verschweißung oder Verlötung verbunden ist.

Zur Klarstellung, die Verbindung zwischen dem metallischen Kontaktelement und den Randstreifen der Anodenstromkollektoren oder der Kathodenstromkollektoren ist eine unmittelbare. Im Falle einer Verschweißung ist das metallische Kontaktelement unmittelbar mit den freien Randstreifen verschmolzen, während im Fall der Verlötung allenfalls eine dünne Schicht aus einem Lotmetall zwischen dem metallischen Kontaktelement und den freien Randstreifen angeordnet ist.

Die unmittelbare Anbindung des Kontaktelements an die Stromkollektoren der Elektroden kann hervorragende Entwärmungseigenschaften gewährleisten, was nachfolgend noch erläutert wird.

Es ist besonders bevorzugt, dass das erfindungsgemäße Energiespeicherelement zwei metallische Kontaktelemente umfasst, von denen eines mit den freien Randstreifen der Anodenstromkollektoren durch Verschweißung oder Verlötung verbunden ist und das andere mit den freien Randstreifen der Kathodenstromkollektoren durch Verschweißung oder Verlötung verbunden ist.

### Bevorzugte Ausgestaltungen des elektrochemischen Systems

Grundsätzlich umfasst die Erfindung Energiespeicherelemente unabhängig von ihrer elektrochemischen Ausgestaltung. In besonders bevorzugten Ausführungsformen ist das erfindungsgemäße Energiespeicherelement jedoch als Lithium-Ionen-System ausgebildet, weist also Elektroden auf, die Lithium reversibel aufnehmen und wieder abgeben können. Für von dem Energiespeicherelement umfassten Anoden und Kathoden können daher im Grunde sämtliche für sekundäre Lithium-Ionen-Zellen bekannten Elektrodenmaterialien verwendet werden.

In den negativen Elektroden eines erfindungsgemäßen Energiespeicherelements können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in den negativen Elektroden enthalten sein, bevorzugt ebenfalls in Partikelform. Weiterhin können die negativen Elektroden als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Auch die eingangs erwähnten, auf metallischem Lithium basierenden Anoden oder aus metallischem Lithium bestehende Anoden können eingesetzt werden.

Für die positiven Elektroden eines erfindungsgemäßen Energiespeicherelements kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Ci_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat, Styrol-Butadien-Rubber (SBR) oder Carboxymethylzellulose. Übliche Leitmittel sind Ruß, Graphit, Graphen, Kohlenstoffnanofasern und Metallpulver.

### Bevorzugte Ausgestaltungen der Separatoren

Das erfindungsgemäße Energiespeicherelement umfasst bevorzugt Separatoren aus einem Kunststoffmaterial, welches von einem flüssigen Elektrolyten durchdrungen werden kann. Zu diesem Zweck können beispielsweise Kunststofffolien mit Mikroporen aber auch Vliese, Gewebe und andere für einen flüssigen Elektrolyten durchlässige Flächengebilde aus Kunststoffmaterialien zum Einsatz kommen. Voraussetzung ist jeweils, dass das verwendete Kunststoffmaterial elektrisch isolierende Eigenschaften aufweist. Geeignete Kunststoffmaterialien sind beispielsweise Polyolefine oder Polyetherketone oder Polyethylenterephtalat.

Bevorzugt werden Separatoren eingesetzt, die eine Dicke im Bereich von 5 µm bis 50 µm aufweisen.

Bei Verwendung solcher Separatoren umfasst das erfindungsgemäße Energiespeicherelement bevorzugt einen Elektrolyten, für den Fall eines als Lithium-Ionen-System ausgebildeten Energiespeicherelements insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF4), Lithiumbis(trifluoromethansulfonyl)imid (LiTFSI), Lithiumbis(fluorosulfonyl)imid (LiFSI) und Lithiumbis(oxalato)borat (LiBOB).

### Bevorzugte Ausgestaltungen des Festkörperelektrolyten

Die Verwendung der Schichten aus dem Festkörperelektrolyten ist vor allem vorteilhaft, wenn Anoden basierend auf metallischem Lithium verwendet werden.

Bei dem Festkörperelektrolyt kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolytzum Beispiel Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF4) gelöst vorliegen.

Bei Verwendung eines Festkörperelektrolyten ist es vorteilhaft, wenn Anteile (z.B. bis zu 10 Gewichtsprozent) an dem Festkörperelektrolyten, beispielsweise einem der genannten Polymerfestkörperelektrolyten mit einem darin gelösten Leitsalz, auch in den Anoden und/oder den Kathoden des erfindungsgemäßen Energiespeicherelements enthalten sind.

### Weitere bevorzugte Ausgestaltungen der Separatoren

Bei einer Konfiguration mit Separator und flüssigem Elektrolyten zeichnet sich das erfindungsgemäße Energiespeicherelement bevorzugt durch mindestens eines der unmittelbar folgenden Merkmale a. bis c. aus:
a. Die Separatoren sind polygonale, bevorzugt rechteckige, Flächengebilde aus einem elektrisch isolierenden Kunststoffsubstrat, insbesondere in Form der erwähnten Kunststofffolie mit Mikroporen oder des Vlieses, welche von einem flüssigen Elektrolyten durchdrungen werden können.
b. Die Separatoren weisen eine Dicke im Bereich von 5 µm bis 50 µm, bevorzugt im Bereich von 10 µm bis 30 µm, besonders bevorzugt im Bereich von 7 µm bis 12 µm, auf.
c. Die Ränder der Separatoren bilden die Seiten des Verbundkörpers, aus denen die freien Randstreifen der Anodenstromkollektoren und der Kathodenstromkollektoren herausragen.

Dabei sind die unmittelbar vorgenannten Merkmale a. bis c. vorzugsweise gemeinsam verwirklicht.

In besonders bevorzugten Ausführungsform zeichnet sich das erfindungsgemäße Energiespeicherelement weiter durch das unmittelbar folgende Merkmal a. aus:
a. Die Separatoren umfassen mindestens ein anorganisches Material, insbesondere ein keramisches Material, das ihre Widerstandsfähigkeit gegenüber thermischen Belastungen verbessert.

Dieses anorganische Material schützt die Separatoren vor einer Schrumpfung in Folge einer lokalen Erwärmung, wie sie beispielsweise beim Anschweißen eines Kontaktelements auftreten kann. Das Risiko eines Kurzschlusses wird so beträchtlich vermindert.

Die obigen Angaben in Bezug auf die bevorzugte Dicke der Separatoren beziehen sich bevorzugt auch auf die Separatoren einschließlich des mindestens einen anorganischen Materials.

In besonders bevorzugten Ausgestaltungen des erfindungsgemäßen Energiespeicherelements werden die Separatoren, die zur Erhöhung ihrer Widerstandsfähigkeit das mindestens eine anorganische Material umfassen, mit den weiter unten beschriebenen Stromkollektoren, die einen Randbereich mit einem Stützmaterial aufweisen, in Kombination realisiert.

In einer weiteren bevorzugten Weiterbildungzeichnen sich die Separatoren durch das unmittelbar folgende Merkmal a. aus:
a. Das mindestens eine anorganische Material ist als partikuläres Füllmaterial in den Separatoren enthalten.

Bei den Separatoren kann es sich in bevorzugten Ausführungsformen um elektrisch isolierende Kunststofffolien handeln, in die das partikuläre Füllmaterial eingelagert ist. Es ist bevorzugt, dass die Kunststofffolie von dem Elektrolyten durchdrungen werden kann, beispielsweise weil sie die erwähnten Mikroporen aufweist.

Vorzugsweise beträgt der Anteil an dem partikulären Füllmaterial in dem Separator mindestens 40 Gew.-%, besonders bevorzugt mindestens 60 Gew.-%, bezogen auf die Masse der Separatoren ohne Elektrolyt.

In einer weiteren bevorzugten Weiterbildung zeichnen sich die Separatoren durch das unmittelbar folgende Merkmal a. aus:
a. Das mindestens eine anorganische Material liegt als Beschichtung auf einer Oberfläche der Separatoren vor.

Gemäß dieser Weiterbildung kann es sich bei den Separatoren in bevorzugten Ausführungsformen um eine Kunststofffolie oder ein Vlies oder ein Gewebe oder ein sonstiges elektrisch isolierendes Flächengebilde handeln, die oder das mit dem partikulären Füllmaterial beschichtet ist.

In diesem Fall werden bevorzugt Separatoren eingesetzt, die eine Basisdicke im Bereich von 5 µm bis 20 µm, bevorzugt im Bereich von 7 µm bis 12 µm, aufweisen. Die Gesamtdicke der Separatoren ergibt sich aus der Basisdicke und der Dicke der Beschichtung.

In einigen Ausführungsformen ist nur eine Seite der Separatoren mit dem anorganischen Material beschichtet. In weiteren möglichen Ausführungsformen sind die Separatoren beidseitig mit dem anorganischen Material beschichtet.

Die Dicke der Beschichtung liegt bevorzugt im Bereich von 0,5 µm bis 5 µm. Hieraus ergibt sich, dass die Gesamtdicke der Separatoren im Fall einer beidseitigen Beschichtung bevorzugt im Bereich von 6 µm bis 30 µm, besonders bevorzugt im Bereich von 8 µm bis 22 µm, liegt. Im Falle einer einseitigen Beschichtung liegt die Dicke bevorzugt im Bereich von 5,5 µm bis 20,5 µm, besonders bevorzugt im Bereich von 7,5 µm bis 17 µm.

Gegebenenfalls kann es auch bevorzugt sein, dass die verwendeten Separatoren ein anorganisches Material als Füllstoff und das gleiche oder ein anderes anorganisches Material als Beschichtung umfassen.

Im Hinblick auf das anorganische Material des oder der Separatoren zeichnen sich die Separatoren in bevorzugten Ausführungsformen durch mindestens eines der unmittelbar folgenden Merkmale a. bis e. aus:
a. Das mindestens eine anorganische Material ist oder umfasst ein elektrisch isolierendes Material.
b. Das mindestens eine anorganische Material ist oder umfasst mindestens ein Material aus der Gruppe mit keramischem Material, glaskeramischem Material und Glas.
c. Das mindestens eine anorganische Material ist oder umfasst ein Lithiumionen leitendes keramisches Material, beispielsweise Li₅AlO₄*Li₄SiO₄ oder LiAlSi₂O₆.
d. Das mindestens eine anorganische Material ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Es ist besonders bevorzugt, dass die unmittelbar vorstehenden Merkmale a. bis c. oder die unmittelbar vorstehenden Merkmale a. und b. und d. oder die unmittelbar vorstehenden Merkmale a. und b. und e. in Kombination miteinander verwirklicht sind.

Unter den genannten Materialien sind als Beschichtungsmaterialien Aluminiumoxid (Al₂O₃), Titanoxid (TiO₂) und Siliziumdioxid (SiO₂) besonders bevorzugt.

In weiteren bevorzugten Weiterbildungen zeichnen sich die Separatoren durch mindestens eines der unmittelbar folgenden Merkmale a. bis c. aus:
a. Sie umfassen das mindestens eine anorganische Material lediglich bereichsweise.
b. Sie weisen einen Randstreifen auf, in dem sie das mindestens eine anorganische Material als Beschichtung und/oder als partikuläres Füllmaterial umfassen.
c. Sie weisen einen Hauptbereich auf, in dem sie frei von dem mindestens einen anorganischen Material sind.

Es ist besonders bevorzugt, dass die unmittelbar vorstehenden Merkmale a. bis c. in Kombination miteinander verwirklicht sind.

Es ist nicht erforderlich, dass die Separatoren das anorganische Material in homogener Verteilung umfassen oder gleichmäßig und überall mit dem Material beschichtet sind. Vielmehr kann es sogar bevorzugt sein, dass die Separatoren in bestimmten Bereichen, beispielsweise in dem erwähnten Hauptbereich, frei von dem anorganischen Material sind. In diesem Bereich wird eine erhöhte thermische Beständigkeit der Separatoren nicht so sehr benötigt wie an ihren Rändern. Darüber hinaus kann das anorganische Material insbesondere in diesem Bereich zu einer ungewollten Erhöhung des elektrischen Widerstands beitragen.

### Bevorzugte Ausgestaltungen der Stromkollektoren

Die Stromkollektoren der Elektroden des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle von Elektroden für ein Lithium-Ionen-System eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

In einigen besonders bevorzugten Ausgestaltungen kann das erfindungsgemäße Energiespeicherelement durch mindestens eines der unmittelbar folgenden Merkmale a. bis c. gekennzeichnet sein:
a. Die Hauptbereiche der mit dem Kontaktelement durch Verschweißung oder Verlötung verbundenen Stromkollektoren weisen eine Vielzahl von Durchbrechungen auf.
b. Bei den Durchbrechungen in den Hauptbereich handelt es sich um runde oder eckige Löcher, insbesondere Stanz- oder Bohrlöcher.
c. Die mit dem Kontaktelement durch Verschweißung verbundenen Stromkollektoren sind in dem Hauptbereich perforiert, insbesondere durch Rundloch-oder Schlitzlochperforation.

Bevorzugt sind die unmittelbar vorstehenden Merkmale a. und b. oder a. und c., besonders bevorzugt die drei unmittelbar vorstehenden Merkmale a. bis c., in Kombination miteinander realisiert.

Die Vielzahl von Durchbrechungen resultiert in einem verringerten Volumen und auch in einem verringerten Gewicht der Stromkollektoren. Dies macht es möglich, mehr Aktivmaterial in die Elektroden einzubringen und auf diese Weise die Energiedichte einer hieraus gebildeten elektrochemischen Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den Hauptbereich eingebracht.

Grundsätzlich ist die Geometrie der Durchbrechungen nicht erfindungswesentlich. Wichtig ist, dass in Folge der Einbringung der Durchbrechungen die Masse der Stromkollektoren verringert und mehr Platz für Aktivmaterial da ist, da die Durchbrechungen mit dem Aktivmaterial befüllt werden können.

Sehr vorteilhaft kann sein, bei der Einbringung der Durchbrechungen darauf zu achten, dass der maximale Durchmesser der Durchbrechungen nicht zu groß ist. Bevorzugt sollten die Dimensionen der Durchbrechungen nicht mehr als das doppelte der Dicke der Schicht des Elektrodenmaterials auf dem jeweiligen Stromkollektor betragen.

In besonders bevorzugten Ausgestaltungen ist das erfindungsgemäße Energiespeicherelement durch das unmittelbar folgende Merkmal a. gekennzeichnet:
a. Die Durchbrechungen in den Stromkollektoren, insbesondere in den Hauptbereichen, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich das erfindungsgemäße Energiespeicherelement weiterhin durch mindestens eines der unmittelbar folgenden Merkmale a. und b. aus:
a. Die mit dem Kontaktelement durch Verschweißung oder Verlötung verbundenen Stromkollektoren weisen zumindest in einem Teilabschnitt des jeweiligen Hauptbereichs ein geringeres Flächengewicht auf als der freie Randstreifen derselben Stromkollektoren.
b. Die mit dem Kontaktelement durch Verschweißung oder Verlötung verbundenen Stromkollektoren weisen in den freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Die freien Randstreifen der Anoden- und Kathodenstromkollektoren begrenzen den Hauptbereich zu dem Rand hin, entlang dem sie sich erstrecken. Im Fall eines mit den Durchbrechungen versehenen Stromkollektors charakterisieren auch die Durchbrechungen den Hauptbereich. Mit anderen Worten, die Grenze zwischen dem Hauptbereich und dem oder den freien Randstreifen kann in bevorzugten Ausführungsformen einem Übergang zwischen Bereichen mit und ohne Durchbrechungen entsprechen.

Die Durchbrechungen sind bevorzugt im Wesentlichen gleichmäßig über den Hauptbereich verteilt.

In weiteren besonders bevorzugten Ausführungsformen zeichnet sich das erfindungsgemäße Energiespeicherelement durch mindestens eines der unmittelbar folgenden Merkmale a. bis c. aus:
a. Das Flächengewicht der Stromkollektoren ist in dem Hauptbereich gegenüber dem Flächengewicht der Stromkollektoren in den freien Randstreifen um 5% bis 80 % reduziert.
b. Die Stromkollektoren weisen in dem Hauptbereich eine Lochfläche im Bereich von 5 % bis 80 % auf.
c. Die Stromkollektoren weist in dem Hauptbereich eine Zugfestigkeit von 20 N/mm² bis 250 N/mm² auf.

Es ist besonders bevorzugt, dass die unmittelbar vorstehenden Merkmale a. bis c. in Kombination miteinander verwirklicht sind.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Besonders bevorzugt, zeichnet sich das erfindungsgemäße Energiespeicherelement weiterhin durch das unmittelbar folgende Merkmal a. aus:
a. Die Hauptbereiche der Anodenstromkollektoren und die Hauptbereiche der Kathodenstromkollektoren sind beide durch eine Vielzahl der Durchbrechungen gekennzeichnet.

Die vorstehend beschriebenen bevorzugten Ausgestaltungen des mit den Durchbrechungen versehenen Stromkollektors sind unabhängig voneinander auf die Anodenstromkollektoren und die Kathodenstromkollektoren anwendbar.

Die Verwendung perforierter oder auf sonstige Weise mit einer Vielzahl von Durchbrechungen versehener Stromkollektoren ist bei Lithium-ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren herkömmlicherweise über separate elektrische Stromleiter. Eine zuverlässige Schweißverbindung dieser Stromleiter an perforierte Stromkollektoren in industriellen Massenproduktionsprozessen ist bei herkömmlichen Lithium-Ionen-Zellen ohne eine akzeptable Fehlerrate jedoch nur schwer realisierbar.

Erfindungsgemäß wird dieses Problem durch die beschriebene Verschweißung oder Verlötung der freien Randstreifen der Anodenstromkollektoren und/oder der Kathodenstromkollektoren mit dem oder den Kontaktelementen gelöst. Das erfindungsgemäße Konzept ermöglicht den vollständigen Verzicht auf separate Stromleiter und ermöglicht so die Verwendung materialarmer, mit Durchbrechungen versehener Stromkollektoren. Besonders vorteilhaft ist es dabei, wenn die freien Randstreifen der Stromkollektoren nicht mit Durchbrechungen versehen sind, da insbesondere in diesen Fällen eine Verschweißung besonders zuverlässig mit ausgesprochen geringen Ausschussraten erfolgen kann. Dies gilt insbesondere dann, wenn die Ränder der Stromkollektoren mit der nachfolgend beschriebenen Stützschicht bzw. dem nachfolgend beschriebenen Stützmaterial versehen sind und der Separator gegebenenfalls, wie oben beschrieben, gegenüber thermischen Belastungen verbessert ist.

### Stützbeschichtung

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise für die Verschweißung oder Verlötung mit dem Kontaktelement, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das sich von dem auf dem jeweiligen Stromkollektor angeordneten Elektrodenmaterial unterscheidet.

Dieses Stützmaterial stabilisiert den Randstreifen und soll ein unbeabsichtigtes Umbiegen oder Niederschmelzen des Randstreifens verhindern, insbesondere bei der Herstellung der Schweiß- oder Lötverbindung zu dem Kontaktelement.

Das im Rahmen der vorliegenden Erfindung einsetzbare Stützmaterial zeichnet sich bevorzugt durch mindestens eines der unmittelbar folgenden zusätzlichen Merkmale a. bis e. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).
e. Bei dem Stützmaterial handelt es sich um ein Metall, das einen höheren Schmelzpunkt aufweist als das Metall des jeweiligen Stromkollektors.

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieserVerbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

In besonders bevorzugten Ausführungsformen zeichnet sich das erfindungsgemäße Energiespeicherelement durch mindestens eines der unmittelbar folgenden Merkmale a. bis c. aus:
a. Der freie Randstreifen des Anodenstromkollektors und/oder der freie Randstreifen des Kathodenstromkollektors umfassen einen ersten Teilbereich und einen zweiten Teilbereich, wobei der erste Teilbereich mit dem Stützmaterial beschichtet ist, während der zweite Teilbereich unbeschichtet ist.
b. Der erste Teilbereich und der zweite Teilbereich weisen jeweils die Form einer Linie oder eines Streifens auf und verlaufen parallel zueinander.
c. Der erste Teilbereich ist zwischen dem Hauptbereich des Anodenstromkollektors oder des Kathodenstromkollektors und dem zweiten Teilbereich angeordnet.

Es ist besonders bevorzugt, dass die unmittelbar vorstehenden Merkmale a. bis c. in Kombination miteinander verwirklicht sind.

In einer alternativen Ausführungsform kann es bevorzugt sein, dass sich das erfindungsgemäße Energiespeicherelement durch das unmittelbar folgende Merkmal a. auszeichnet:
a. Der freie Randstreifen des Anodenstromkollektors und/oder der freie Randstreifen des Kathodenstromkollektors ist vollflächig mit dem Stützmaterial beschichtet.

Die Beschichtung des Anodenstromkollektors mit dem Stützmaterial kann nach unterschiedlichen Verfahren erfolgen, beispielsweise durch trockene Beschichtung oder Abscheidung aus einer Dispersion oder aus der Gasphase, gegebenenfalls unter Einsatz eines kompatiblen Bindersystems.

### Besonders bevorzugte Ausgestaltungen des elektrochemischen Systems

In einer ersten, besonders bevorzugten Variante des elektrochemischen Systems zeichnet sich das erfindungsgemäße Energiespeicherelement durch das unmittelbar folgende Merkmal a. aus:
a. Das negative Elektrodenmaterial umfasst als Aktivmaterial mindestens ein Material aus der Gruppe mit Silizium, Aluminium, Zinn, Antimon und eine Verbindung oder Legierung dieser Materialien, die Lithium reversibel ein- und auslagern kann, in einem Anteil von 20 Gew.-% bis 90 Gew.-%.

Die Gewichtsangaben beziehen sich hierbei auf die Trockenmasse des negativen Elektrodenmaterials, also ohne Elektrolyt und ohne Berücksichtigung des Gewichts des Anodenstromkollektors.

Zinn, Aluminium, Antimon und Silizium sind in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches.

Unter den genannten Aktivmaterialien, die bevorzugt ebenfalls in Form von Partikeln verwendet werden können, ist Silizium besonders bevorzugt. Erfindungsgemäß besonders bevorzugt sind negative Elektroden, die als Aktivmaterial Silizium in einem Anteil von 20 Gew.-% bis 90 Gew.-% enthalten.

Auch einige Verbindungen von Silizium, Aluminium, Zinn und/oder Antimon können Lithium reversibel ein- und auslagern. Beispielsweise kann in einigen bevorzugten Ausführungsformen das Silizium in oxidischer Form in der negativen Elektrode enthalten sein. In diesen Ausführungsformen kann es bevorzugt sein, dass die negative Elektrode Siliziumoxid in einem Anteil von 20 Gew.-% bis 90 Gew.-% aufweist.

Das Design des erfindungsgemäßen Energiespeicherelements ermöglicht einen signifikanten Vorteil. Wie eingangs erwähnt, können in Fällen, bei denen die elektrische Anbindung von Zellen über separate Stromleiter erfolgt, beim Laden und Entladen unmittelbar in der Nähe der Stromleiter größere thermomechanische Belastungen auf die Elektroden wirken als entfernt von den Stromleitern. Dieser Unterschied tritt besonders ausgeprägt bei negativen Elektroden zu Tage, die als Aktivmaterial einen Anteil an Silizium, Aluminium, Zinn und/oder Antimon aufweisen. Die elektrische Anbindung der Stromkollektoren über Kontaktelemente gemäß der Erfindung ermöglicht hingegen nicht nur eine vergleichsweise gleichmäßige und effiziente Entwärmung der Elektroden, vielmehr werden dadurch auch die beim Laden und Entladen auftretenden thermomechanischen Belastungen gleichmäßig auf die Elektroden verteilt. Überraschenderweise ermöglicht dies die Beherrschung sehr hoher Anteile an Silizium und/oder Zinn und/oder Antimon in der negativen Elektrode. Auch bei hohen Anteilen treten beim Laden und Entladen vergleichsweise selten oder keine Schäden in Folge der thermomechanischen Belastungen auf. Durch Erhöhung des Anteils an beispielsweise Silizium in der Anode lässt sich die Energiedichte des erfindungsgemäßen Energiespeicherelements stark erhöhen.

Der Fachmann versteht, dass es sich bei dem Zinn, dem Aluminium, dem Silizium und dem Antimon nichtzwingend um Metalle in ihrer Reinstform handeln muss. So können beispielsweise Siliziumpartikel auch Spuren oder Anteile anderer Elemente, insbesondere anderer Metalle (abgesehen von dem ohnehin in Abhängigkeit des Ladezustands enthaltenen Lithium), aufweisen, beispielsweise in Anteilen von bis zu 40 Gew.-%, insbesondere in Anteilen von bis zu 10 Gew.-%. Es können also auch Legierungen des Zinns, des Aluminiums, des Siliziums und des Antimons eingesetzt werden.

In besonders bevorzugten Ausführungsformen derersten, besonders bevorzugten Variante zeichnet sich das erfindungsgemäße Energiespeicherelement durch mindestens eines der unmittelbar folgenden Merkmale a. und b. aus:
a. Das negative Elektrodenmaterial umfasst als negatives Aktivmaterial weiterhin zur reversiblen Ein- und Auslagerung von Lithium befähigte Partikel auf Kohlenstoffbasis, wie beispielsweise graphitischen Kohlenstoff, insbesondere eine Mischung aus dem Silizium und diesen kohlenstoffbasierten Partikeln.
b. Die zur Interkalation von Lithium befähigten Partikel auf Kohlenstoffbasis sind in dem Elektrodenmaterial in einem Anteil von 5 Gew.-% bis 75 Gew.-%, insbesondere in einem Anteil von 15 Gew.-% bis 45 Gew.-%, enthalten.

In der negativen Elektrode können als Aktivmaterialien beispielsweise Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform.

In weiteren besonders bevorzugten Ausführungsformen der ersten, besonders bevorzugten Variante zeichnet sich das erfindungsgemäße Energiespeicherelement durch mindestens eines der unmittelbar folgenden Merkmale a. bis c. aus:
a. Das negative Elektrodenmaterial umfasst einen Elektrodenbinder und/oder ein Leitmittel zur Erhöhung der elektrischen Leitfähigkeit der negativen Elektroden.
b. Der Elektrodenbinder ist in dem negativen Elektrodenmaterial in einem Anteil von 1 Gew.-% bis 15 Gew.-%, insbesondere in einem Anteil von 1 Gew.-% bis 5 Gew.-%, enthalten.
c. Das Leitmittel ist in dem negativen Elektrodenmaterial in einem Anteil von 0,1 Gew.-% bis 15 Gew.-%, insbesondere in einem Anteil von 1 Gew.-% bis 5 Gew.-%, enthalten.

Es ist besonders bevorzugt, dass die unmittelbar vorstehenden Merkmale a. bis c. in Kombination miteinander verwirklicht sind.

Die Aktivmaterialien sind auch hier bevorzugt in eine Matrix aus dem Elektrodenbinder eingebettet, wobei benachbarte Partikel in der Matrix bevorzugt in Kontakt miteinander stehen.

Geeignete Elektrodenbinder basieren auch hier beispielsweise auf Polyvinylidenfluorid (PVDF), Polyacrylat, Styrol-Butadien-Rubber (SBR) oder Carboxymethylzellulose. Geeignete Leitmittel sind Ruß, Graphit, Graphen, Kohlenstoffnanofasern und Metallpulver.

Im Rahmen der der ersten, besonders bevorzugten Variante ist es besonders bevorzugt, dass das positive Elektrodenmaterial einen PVDF-Binder und das negative Elektrodenmaterial einen Polyacrylat-Binder, insbesondere Lithiumpolyacrylsäure, umfasst.

Für die positiven Elektroden kommen im Rahmen der der ersten, besonders bevorzugten Variante als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden.

Der hohe Gehalt an Silizium in den Anoden eines erfindungsgemäßen Energiespeicherelements bedingt entsprechend hochkapazitive Kathoden, um eine gute Zellbalance erreichen zu können. Daher sind insbesondere NMC, NCA oder NMCA bevorzugt.

In besonders bevorzugten Ausführungsformen der ersten, besonders bevorzugten Variante zeichnen sich die positiven Elektroden durch mindestens eines der unmittelbar folgenden Merkmale a. bis e. aus:
a. Das positive Elektrodenmaterial umfasst als Aktivmaterial mindestens eine zur reversiblen Ein- und Auslagerung von Lithium befähigte Metalloxidverbindung, bevorzugt eine der vorstehend genannten Verbindungen, insbesondere NMC, NCA oder NMCA.
b. Die mindestens eine oxidische Verbindung ist in dem Elektrodenmaterial in einem Anteil von 50 Gew.-% bis 99 Gew.-%, insbesondere in einem Anteil von 80 Gew.-% bis 99 Gew.-%, enthalten.
c. Das positive Elektrodenmaterial umfasst ebenfalls bevorzugt den Elektrodenbinder und/oder das Leitmittel.
d. Der Elektrodenbinder ist in dem positiven Elektrodenmaterial in einem Anteil von 0,5 Gew.-% bis 15 Gew.-%, besonders bevorzugt in einem Anteil von 1 Gew.-% bis 10 Gew.-% insbesondere in einem Anteil von 1 Gew.-% bis 2 Gew.-% enthalten.
e. Das Leitmittel ist in dem positiven Elektrodenmaterial in einem Anteil von 0,1 Gew.-% bis 15 Gew.-% enthalten.

Es ist besonders bevorzugt, dass die unmittelbar vorstehenden Merkmale a. bis e. in Kombination miteinander verwirklicht sind.

Sowohl im Fall der positiven als auch im Fall der negativen Elektroden ist es bevorzugt, dass sich die prozentualen Anteile der jeweils im Elektrodenmaterial enthaltenen Komponenten auf 100 Gew.-% ergänzen.

Während hochkapazitive Kathoden Lithium reversibel im Bereich von 200 - 250 mAh/g speichern können, liegt die theoretische Kapazität von Silizium bei ca. 3500 mAh/g. Dies führt zu vergleichsweise dicken Kathoden mit hoher Flächenbeladung und sehr dünnen Anoden mit niedriger Flächenbeladung. Da Materialien wie Silizium auf Grund der sehr hohen Kapazität stark auf kleine Spannungsänderungen reagieren, sollte der Anodenstromkollektor so homogen wie möglich beschichtet werden. Bereits kleine Unterschiede in der Beladungdes Stromkollektors und/oder der Verdichtung des Elektrodenmaterials können zu starken lokalen Abweichungen in der Elektrodenbalance und/oder Stabilität führen.

Aus diesem Grund zeichnen sich die negativen Elektroden in bevorzugten Ausführungsformen der ersten, besonders bevorzugten Variante durch das unmittelbar folgende Merkmal a. aus:
a. Das Flächengewicht der negativen Elektroden weicht je Flächeneinheit von mindestens 10 cm² um maximal 2 % von einem Mittelwert ab.

Der Mittelwert ergibt sich hierbei als Quotient aus der Summe von mindestens 10 Messergebnissen durch die Anzahl der durchgeführten Messungen.

Weiterhin umfasst das erfindungsgemäße Energiespeicherelement bevorzugt einen Elektrolyten, beispielsweise auf Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF4), Lithiumbis(trifluoromethansulfonyl)imid (LiTFSI), Lithiumbis(fluorosulfonyl)imid (LiFSI) und Lithiumbis(oxalato)borat (LiBOB).

In besonders bevorzugten Ausführungsformen derersten, besonders bevorzugten Variante zeichnet sich das erfindungsgemäße Energiespeicherelement durch mindestens eines der unmittelbar folgenden Merkmale a. bis d. aus:
a. Es umfasst einen Elektrolyten, der eine Mischung aus Tetrahydrofuran (THF) und 2-Methyltetrahydrofuran (mTHF) umfasst.
b. Das Volumenverhältnis von THF: zu mTHF in der Mischung liegt im Bereich von 2: 1 bis 1: 2, besonders bevorzugt beträgt es 1:1.
c. Es umfasst einen Elektrolyten, der LiPF₆ als Leitsalz umfasst.
d. Das Leitsalz in einem Anteil von 1 bis 2,5 M, insbesondere in einem Anteil von 1 bis 1,5 M, in dem Elektrolyten enthalten.

Besonders bevorzugt zeichnet sich der Elektrolyt in der ersten, besonders bevorzugten Variante durch alle vorstehenden Merkmale a. bis d. aus.

In alternativen, besonders bevorzugten Ausführungsformen zeichnet sich das erfindungsgemäße Energiespeicherelement in der ersten, besonders bevorzugten Variante durch mindestens eines der unmittelbar folgenden Merkmale a. bis e. aus:
a. Es umfasst einen Elektrolyten, der eine Mischung aus Fluoroethylencarbonat (FEC) und Ethylmethylcarbonat (EMC) umfasst.
b. Das Volumenverhältnis von FEC : zu EMC in der Mischung liegt im Bereich von 1: 7 bis 5 : 7, besonders bevorzugt beträgt es 3 : 7.
c. Es umfasst einen Elektrolyten, der LiPF₆ als Leitsalz umfasst.
d. Das Leitsalz ist in einer Konzentration von 1,0 bis 2,0 M, insbesondere von 1,5 M, in dem Elektrolyten enthalten.
e. Der Elektrolyt umfasst Vinylencarbonat (VC), insbesondere in einem Anteil von 1 bis 3 Gew.-%.

Besonders bevorzugt zeichnet sich der Elektrolyt durch alle vorstehenden Merkmale a. bis e. aus.

Zur Verbesserung der Zyklenstabilität wird das Verhältnis der Kapazitäten von Anoden zu Kathoden vorzugsweise so ausbalanciert, dass die mögliche Kapazität des Siliziums nicht voll ausgenutzt wird.

Besonders bevorzugt zeichnet sich das erfindungsgemäße Energiespeicherelement in der ersten, besonders bevorzugten Variante durch das unmittelbar folgende Merkmal a. aus:
a. Die Kapazitäten von Anoden zu Kathoden des erfindungsgemäßen Energiespeicherelements werden so ausbalanciert, dass im Betrieb je Gramm Elektrodenmaterial der negativen Elektrode lediglich 700-1500 mAh reversibel genutzt werden.

Durch diese Maßnahme lassen sich Volumenänderungen reduzieren.

### Weitere besonders bevorzugte Ausgestaltungen des elektrochemischen Systems

In einer zweiten, besonders bevorzugten Variante des elektrochemischen Systems zeichnet sich das erfindungsgemäße Energiespeicherelement besonders durch das unmittelbar folgende zusätzliche Merkmal a. aus:
a. Die Schicht aus dem negativen Elektrodenmaterial umfasst metallisches Lithium.

Während hochkapazitive Kathoden Lithium reversibel im Bereich von 200 - 250 mAh/g speichern können, liegt die theoretische Kapazität von metallischem Lithium bei ca. 3842 mAh/g. Dies ermöglicht die Herstellung von Zellen mit sehr dünnen Anoden. Kathodenseitig ist zwar im Gegenzug eine vergleichsweise hohe Flächenbeladung erforderlich. Insgesamt lässt sich so die Energiedichte jedoch erheblich steigern.

Die Anode kann in einigen bevorzugten Ausführungsformen derzweiten, besonders bevorzugten Variante des elektrochemischen Systems als dünne Schicht aus metallischem Lithium vorliegen. Diese Schicht kann beispielsweise mittels eines CVD- oder PVD-Verfahrens (CVD = Chemical Vapour Deposition, PVD = Physical Vapour Deposition) aus der Gasphase auf dem Anodenstromkollektor abgeschieden werden.

Besonders bevorzugt zeichnet sich das erfindungsgemäße Energiespeicherelement in der zweiten, besonders bevorzugten Variante allerdings durch mindestens eines der zwei unmittelbar folgenden zusätzlichen Merkmale a. und b. aus:
a. Die Schicht aus dem negativen Elektrodenmaterial umfasst eine poröse, elektrisch leitfähige Matrix mit offenporiger Struktur.
b. In die Poren der Matrix ist das metallische Lithium eingelagert.

Besonders bevorzugt sind die unmittelbar vorstehenden zusätzlichen Merkmale a. und b. in Kombination realisiert.

Gegebenenfalls kann die Anode neben dem metallischen Lithium noch mindestens ein weiteres Material umfassen, beispielsweise mindestens ein Metall, mit dem das Lithium legiert ist. Gegebenenfalls ist das mindestens eine weitere Material gleichfalls in die Poren der Matrix eingelagert.

Ein Problem, das der Marktfähigkeit von Zellen mit metallischer Lithiumanode bislang entgegenstand, resultiert daraus, dass solche Anoden bei einer vollständigen Entladung restlos abgebaut werden. Das Volumen der Anoden kann beim Entladen also gegen Null gehen. Hieraus können, wie im Fall von Silizium als Aktivmaterial, massive Volumenänderungen innerhalb der Zellen resultieren, die sich beim Laden in umgekehrter Richtung wiederholen. Das Problem ist insbesondere dann kritisch, wenn, wie im Fall des erfindungsgemäßen Energiespeicherelements, schichtförmige Anoden und Kathoden in alternierender Abfolge gestapelt vorliegen. In diesem Fall addieren sich die jeweiligen Volumenänderungen.

Ein weiteres Problem, das bei Zellen mit metallischer Lithiumanode auftreten kann, ist, dass sich das metallische Lithium beim Laden anodenseitig ungleichmäßig aufbaut, es im Extremfall sogar zur Bildungvon Dendriten kommen kann.

Die elektrisch leitfähige Matrix mit der offenporigen Struktur gewährleistet, dass bei Lade- und Entladevorgängen anodenseitig auftretende Volumenänderungen minimiert werden. Ausgehend von einem geladenen Zustand, in dem sich das Lithium zumindest überwiegend, gegebenenfalls auch vollständig, in den Poren der Matrix befindet, wird das Lithium beim Entladen in der Anode abgebaut. Anders als bei aus dem Stand der Technik bekannten Zellen mit metallischer Lithiumanode geht der Anode hierbei aber nahezu kein Volumen verloren, denn dieses wird maßgeblich durch die Matrix bestimmt. Beim Laden kann sich das Lithium, bedingt durch die elektrische Leitfähigkeit der Matrix, dann wieder gleichmäßig in der Anode abscheiden. Ungleichmäßige Lithiumabscheidungen und damit verbundene lokale Volumenzuwächse oder gar Dendritenbildung können so vermieden werden. Zudem werden in Kombination mit der Anbindung der freien Randstreifen der Anodenstromkollektoren und/oder der Kathodenstromkollektoren an das KontaktelementSpannungs- und Temperaturgradienten minimiert.

Von großer Bedeutung ist die offenporige Struktur der Matrix. Unter einer offenporigen Struktur versteht man bekanntlich eine Struktur, die eine Vielzahl von Poren aufweist, die untereinander durch Kanäle oder Durchbrechungen der Porenwände miteinander verbunden sind. In Folge dessen weisen offenporige Strukturen in aller Regel eine große innere Oberfläche auf.

In einer bevorzugten Weiterbildung zeichnet sich die Matrix in der zweiten, besonders bevorzugten Variante des elektrochemischen Systems durch mindestens eines der zwei unmittelbar folgenden zusätzlichen Merkmale a. und b. aus:
a. Die Matrix weist eine Porosität im Bereich von 40 bis 95 % auf.
b. Die Poren in der Matrix zeichnen sich durch einen mittleren Durchmesser im Bereich von 2 bis 50 µm aus.

Besonders bevorzugt sind die unmittelbar vorstehenden zusätzlichen Merkmale a. und b. in Kombination realisiert.

Die Bestimmung von Porositäten (Verhältnis von Volumen der Poren / Gesamtvolumen der Matrix) und Porengrößenverteilungen ist heute keine Hürde mehr. Es gibt zahlreiche Messgeräte, die entsprechende Bestimmungen nach standardisierten Verfahren durchführen. Obige Werte beziehen sich auf Bestimmungen nach den Normen ISO 15901-1 und DIN 66133.

In möglichen Weiterbildungen des unmittelbar vorstehenden Merkmals a. weist die Matrix bevorzugt eine Porosität im Bereich von 50 % bis 95 %, besonders bevorzugt von 70 % bis 95 %, insbesondere von 80 % bis 95 %, auf.

In möglichen Weiterbildungen des unmittelbar vorstehenden Merkmals b. weisen die Poren in der Matrix bevorzugt einen mittleren Durchmesser im Bereich von 7,5 bis 150 µm, besonders bevorzugt von 9 bis 130 µm, insbesondere von 10 bis 120 µm. auf.

Die Poren in der Matrix sind besonders bevorzugt durch Durchlässe verbunden, die einen mittleren Durchmesser im Bereich von 0,5 µm und 50 µm, besonders bevorzugt im Bereich von 1 bis 40 µm, insbesondere im Bereich von 1 bis 25 µm, ganz besonders bevorzugt von 1 bis 10 µm, aufweist.

Idealerweise besteht die Matrix aus einem Material, das sich beim Laden und Entladen der Zelle chemisch nicht verändert.

In einer bevorzugten Weiterbildung zeichnet sich die Matrix in der zweiten, besonders bevorzugten Variante des elektrochemischen Systems durch mindestens eines der vier unmittelbar folgenden zusätzlichen Merkmale a. bis d. aus:
a. Die Matrix umfasst Kohlenstoff, der durch Carbonisierung einer organischen Verbindung gebildet wurde.
b. Die Matrix umfasst den Kohlenstoff in einem Anteil im Bereich von 50 bis 100 Gew-%.
c. Die Matrix enthält neben dem Kohlenstoff mindestens einen Füllstoff, der eine höhere oder eine niedrigere elektrische Leitfähigkeit als der Kohlenstoff aufweist.
d. Die Bei dem Füllstoff handelt es sich um mindestens ein Mitglied aus der Gruppe mit Ruß, CNT, Graphen und Metallpartikel.

Bevorzugtsind die unmittelbar vorstehenden zusätzlichen Merkmale a. und b., besonders bevorzugt die unmittelbar vorstehenden zusätzlichen Merkmale a. bis d., in Kombination realisiert.

Geeignete Varianten von carbonisierbaren organischen Verbindungen und auch von Verfahren zur Carbonisierung sind in der EP 2 669 260A1, der WO 2017/086609 A1 und der US 5510212 A beschrieben, deren Inhalt hiermit durch Bezugnahme vollumfänglich zum Inhalt der vorliegenden Beschreibung gemacht wird.

Ganz besonders bevorzugt, geht man bei der Herstellung der porösen, elektrisch leitfähigen Matrix mit offenporiger Struktur von einer porösen organischen Verbindung, insbesondere von einem Polymer mit einer porösen Struktur, aus.

Die Bildung dieser porösen organischen Verbindung, insbesondere des Polymers mit der porösen Struktur, kann gemäß der EP 2 669 260 A1 beispielsweise erfolgen, indem die Monomerphase einer Monomer-Wasser-Emulsion polymerisiert wird, beispielsweise durch Ringöffnungsmetathese-Polymerisation (Ring-Opening Metathesis Polymerisation, ROMP) einer hierfürzugänglichen Dienverbindung. Beim Polymerisieren werden Wassertropfen eingeschlossen. Nach einer anschließenden Entfernung des Wassers verbleiben an deren Stelle Hohlräume. Die entstandene polymere Matrix mit diesen Hohlräumen kann in einem Folgeschritt carbonisiert werden, wobei ggf. noch Zwischenschritte wie eine oxidative Behandlung erforderlich sein können.

Unter Carbonisierung ist hierbei im Übrigen eine Umwandlung einer organischen Verbindung zu nahezu reinem Kohlenstoff zu verstehen. Eine solche Umwandlung erfolgt in der Regel bei sehr hohen Temperaturen und unter Sauerstoffausschluss. Beispielsweise kann ein PolymerzurCarbonisierung auf eine Temperatur im Bereich von 550 °C bis 2500 °C, vorzugsweise in einer sauerstofffreien Atmosphäre, erhitzt werden.

Die Eigenschaften der Matrix, insbesondere auch ihre Porengröße, können gemäß der EP 2 669 260 A1 im Übrigen gezielt eingestellt werden. Hierzu kann man der Monomer-in-Wasser-Emulsion unterschiedliche Mengen eines Tensids zusetzen. Bevorzugt wird der Volumenanteil des Tensids im Bereich von 0,1 % bis 8 % (basierend auf der Menge des polymerisierbaren Monomers in der Emulsion) variiert.

Durch den Füllstoff gemäß Merkmal c. kann die elektrische Leitfähigkeit der Matrix gezielt erhöht oder abgesenkt werden. Zum Einbringen des Füllstoffs kann dieser beispielsweise der erwähnten Monomer-in-Wasser-Emulsion zugesetzt werden.

Bevorzugt umfasst die Matrix den mindestens einen Füllstoff in einem Anteil im Bereich von 0,1 bis 30 Gew.-%.

In einer bevorzugten Weiterbildung zeichnet sich die das erfindungsgemäße Energiespeicherelement in der zweiten, besonders bevorzugten Variante durch das unmittelbar folgende zusätzliche Merkmal a. aus:
a. Die Schicht aus dem negativen Elektrodenmaterial auf dem Anodenstromkollektor weist eine Dicke im Bereich von 5 bis 100 µm auf.

Das metallische Lithium kann beispielsweise mittels elektrochemischer Abscheidung in die Poren der Matrix eingebracht werden. Hierzu kann die Matrix mit einer Lithiumsalzlösung kontaktiert und mit dem negativen Pol einer Gleichspannungsquelle verbunden werden. Alternativ kann auch kathodenseitig ein Lithiumionen enthaltendes Kathodenmaterial, beispielsweise ein NMC-Material oder LiMoO₃ oder Li₃N, eingesetzt werden. Die elektrochemische Abscheidung des metallischen Lithiums in den Poren der Matrix erfolgt dann beim ersten Laden. Eine weitere Möglichkeit wäre eine Abscheidung des Lithiums mittels CVD oder PVD.

Für die positiven Elektroden kommen in der zweiten, besonders bevorzugten Variante des elektrochemischen Systems als Aktivmaterialien beispielsweise Lithium-Metalloxid-Verbindungen und Lithium-Metallphosphat-Verbindungen wie LiCoO₂ und LiFePO₄ in Frage. Insbesondere sind auch Derivate von LiFePO₄ von Interesse, bei denen Fe teilweise durch Co, Ni oder Mn ersetzt ist. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Die genannten kathodischen Aktivmaterialien werden bevorzugt partikulär eingesetzt.

In einer besonders bevorzugten Ausführungsform der zweiten, besonders bevorzugten Variante zeichnet sich die Kathoden des erfindungsgemäßen Energiespeicherelements entsprechend durch mindestens eines der unmittelbar folgenden zusätzlichen Merkmale a. bis e. aus:
a. Das positive Elektrodenmaterial umfasst als Aktivmaterial mindestens eine zur reversiblen Ein- und Auslagerung von Lithium befähigte Metalloxidverbindung, bevorzugt eine oxidische Cobalt- und/oder Manganverbindung, besonders bevorzugt NMC, NCA oder NMCA.
b. Die mindestens eine zur reversiblen Ein- und Auslagerung von Lithium befähigte Metalloxidverbindung ist in dem Elektrodenmaterial in einem Anteil von 80 Gew.-% bis 99 Gew.-% enthalten.
c. Das positive Elektrodenmaterial umfasst einen Elektrodenbinder und/oder ein Leitmittel zur Erhöhung der elektrischen Leitfähigkeit der positiven Elektroden.
d. Der Elektrodenbinder ist in dem positiven Elektrodenmaterial in einem Anteil von 0,5 Gew.-% bis 15 Gew.-%, bevorzugt von 0,5 Gew.-% bis 5 Gew.-%, enthalten.
e. Das Leitmittel ist in dem positiven Elektrodenmaterial in einem Anteil von 0,1 Gew.-% bis 15 Gew.-%, bevorzugt von 0,5 Gew.-% bis 3,5 Gew.-%, enthalten.

Bevorzugt sind die unmittelbar vorstehenden zusätzlichen Merkmale a. bis e. in Kombination realisiert.

Die Aktivmaterialien der Kathode sind auch hier bevorzugt in eine Matrix aus dem Elektrodenbinder eingebettet, wobei benachbarte Partikel in der Matrix bevorzugt in unmittelbarem Kontakt miteinander stehen. Geeignete Elektrodenbinder basieren beispielsweise auf Polyvinylidenfluorid (PVDF), Polyacrylat, Styrol-Butadien-Rubber (SBR) oder Carboxymethylzellulose. Geeignete Leitmittel sind Ruß, Graphit, Graphen, Kohlenstoffnanofasern und Metallpulver.

In einer weiteren besonders bevorzugten Ausführungsform der zweiten, besonders bevorzugten Variante zeichnet sich das erfindungsgemäße Energiespeicherelement durch mindestens eines der unmittelbar folgenden zusätzlichen Merkmale a. und b. aus:
a. Die Schicht aus dem positiven Elektrodenmaterial umfasst eine poröse, elektrisch leitfähige Matrix mit offenporiger Struktur.
b. In diese Matrix ist Schwefel eingelagert.

Bevorzugt sind die unmittelbar vorstehenden zusätzlichen Merkmale a. und b. in Kombination realisiert.

Bei den Kathoden handelt es sich also in bevorzugten Ausführungsformen der zweiten, besonders bevorzugten Variante um Kathoden, die Schwefel als Aktivmaterial enthalten. Das erfindungsgemäße Energiespeicherelement kann also Lithium-Schwefel-Zellen umfassen. Beispielsweise können die Kathoden eine Mischung aus Schwefel mit einem Zusatz zur Verbesserung der elektrischen Leitfähigkeit, beispielsweise aus der Gruppe mit Graphit, Ruß, CNT und Graphen, umfassen. Alternativ können die Kathoden den Schwefel aber auch in chemisch modifizierter Form umfassen, beispielsweise als Polysulfid.

In der der zweiten, besonders bevorzugten Variante umfasst das erfindungsgemäße Energiespeicherelement bevorzugt Separatoren aus mindestens einer elektrisch isolierenden Kunststofffolie, die von einem flüssigen Elektrolyten durchdrungen werden kann, insbesondere eine Kunststofffolie mit entsprechend dimensionierten Poren. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator im Rahmen der der zweiten, besonders bevorzugten Variante zum Einsatz kommen. Bevorzugt werden Separatoren eingesetzt, die eine Dicke im Bereich von 5 µm bis 50 µm aufweisen.

Alternativ zu einer Separator-Flüssigelektrolyt-Kombination kann die Zelle auch gemäß derzweiten, besonders bevorzugten Variante an Stelle des Separators einen Festkörperelektrolyt aufweisen, beispielsweise einen Festkörperelektrolyten, wie er oben bereits spezifiziert wurde.

Wenn es sich bei den Kathoden um solche mit Schwefel als Aktivmaterial handelt, kann der Separator eine Schutzschicht aufweisen, die die Anode vor dem Elektrolyten und gegebenenfalls darin gelösten Lithiumsulfiden schützt. Diese Schutzschicht kann beispielsweise kathodenseitig auf den Separator aufgebracht sein.

Im Rahmen der zweiten, besonders bevorzugten Variante ist es bevorzugt, dass das erfindungsgemäße Energiespeicherelement neben dem Separator aus der mindestens einen elektrisch isolierenden Kunststofffolie einen flüssigen Elektrolyten umfasst, welcher aus einem Lösemittel oder Lösemittelgemisch und einem lithiumionenhaltigen Leitsalz besteht und mit dem der Separator getränkt ist. Als Leitsalz kommen beispielsweise LiTFSI oder LiPF₆ oder LiBF₄ in Frage. Als Lösemittel sind beispielsweise organische Carbonate, insbesondere Ethylencarbonat (EC), Propylencarbonat (PC), 1,2-Dimethoxyethan (DME), Ethylmethylcarbonat (EMC), Dimethylcarbonat (DMC) oder Diethylcarbonat (DEC) sowie deren Mischungen geeignet.

Wenn es sich bei den es sich bei den Kathoden um solche mit Schwefel als Aktivmaterial handelt, kann als Lösemittel beispielsweise eine Mischung aus Dioxolan (DOL) und aus DME verwendet werden. Darüber hinaus kann der Elektrolyt ein Passivierungsadditiv wie Lithiumnitrat (LiNO₃) enthalten.

In einer ersten, besonders bevorzugten Weiterbildung der zweiten, besonders bevorzugten Variante zeichnet sich das erfindungsgemäße Energiespeicherelement hinsichtlich des Elektrolyten durch mindestens eines der vier unmittelbar folgenden zusätzlichen Merkmale a. bis d. aus:
a. Der Elektrolyt umfasst eine Mischung aus Tetrahydrofuran (THF) und 2-Methyltetrahydrofuran (mTHF).
b. Das Volumenverhältnis von THF: zu mTHF in der Mischung liegt im Bereich von 2:1 bis 1: 2, besonders bevorzugt beträgt es 1:1.
c. Der Elektrolyt umfasst Lithiumhexafluorophosphat (LiPF₆) als Leitsalz.
d. Das Leitsalz in einem Anteil von 1,5 bis 2,5 M, insbesondere von 2 M, in dem Elektrolyten enthalten.

Besonders bevorzugt sind die vier unmittelbar vorstehenden Merkmale a. bis d. in Kombination miteinander realisiert.

In einer zweiten, besonders bevorzugten Weiterbildung der zweiten, besonders bevorzugten Variante zeichnet sich das erfindungsgemäße Energiespeicherelement hinsichtlich des Elektrolyten durch mindestens eines der sechs unmittelbar folgenden zusätzlichen Merkmale a. bis f. aus:
a. Der Elektrolyt umfasst eine Mischung aus Ethylencarbonat (EC) und Dimethylcarbonat (DMC).
b. Das Volumenverhältnis von EC : zu DMC in der Mischung liegt im Bereich von 1 : 7 bis 5 : 7, besonders bevorzugt beträgt es 3 : 7.
c.Der Elektrolyt umfasst LiPF₆ als Leitsalz.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

Besonders bevorzugt sind die sechs unmittelbar vorstehenden Merkmale a. bis f. in Kombination miteinander realisiert.

In einerdritten, besonders bevorzugten Weiterbildung der zweiten, besonders bevorzugten Variante zeichnet sich das erfindungsgemäße Energiespeicherelement hinsichtlich des Elektrolyten durch mindestens eines der sechs unmittelbar folgenden zusätzlichen Merkmale a. bis f. aus:
a. Der Elektrolyt umfasst eine Mischung aus Ethylencarbonat (EC), Dimethylcarbonat (DMC) und Methylacetat (MA).
b. Der Volumenanteil von EC und MA in der Mischung liegt jeweils im Bereich von 20 Vol.-% bis 40 Vol.-% und der Volumenanteil an DMC in der Mischung liegt im Bereich von 30 Vol.-% bis 50 Vol.-%.
c. Der Elektrolyt umfasst LiPF₆ als Leitsalz.
d. Das Leitsalz ist in einer Konzentration von 1,0 bis 2,0 M, insbesondere von 1,2 bis 1,5 M, in dem Elektrolyten enthalten.
e. Der Elektrolyt umfasst Vinylencarbonat, insbesondere in einem Anteil von 1 bis 3 Gew.-%.
f. Der Elektrolyt umfasst Ethylensulfat (DTD), insbesondere in einem Anteil von 0,5 bis 2 Gew.-%.

Besonders bevorzugt sind die sechs unmittelbar vorstehenden Merkmale a. bis f. in Kombination miteinander realisiert.

In einer vierten, besonders bevorzugten Weiterbildung der zweiten, besonders bevorzugten Variante zeichnet sich das erfindungsgemäße Energiespeicherelement hinsichtlich des Elektrolyten durch mindestens eines der vier unmittelbar folgenden zusätzlichen Merkmale a. bis d. aus:
a. Der Elektrolyt umfasst eine Mischung aus 1,3-Dioxolan (DOL) und Dimethoxyethan (DME).
b. Das Volumenverhältnis von DOL : zu DME in der Mischung liegt im Bereich von 2 : 1 bis 1: 2, besonders bevorzugt beträgt es 1:1.
c. Der Elektrolyt umfasst Lithium-bis-(trifluoromethan)sulfonylimid (LiTFSI) als Leitsalz.
d. Das Leitsalz ist in einer Konzentration von 0,5 bis 2,0 M, insbesondere von 1 M, in dem Elektrolyten enthalten.

Besonders bevorzugt sind die vier unmittelbar vorstehenden Merkmale a. bis d. in Kombination miteinander realisiert.

In einer fünften, besonders bevorzugten Weiterbildung der zweiten, besonders bevorzugten Variante zeichnet sich das erfindungsgemäße Energiespeicherelement hinsichtlich des Elektrolyten durch mindestens eines der vier unmittelbar folgenden zusätzlichen Merkmale a. bis d. aus:
a. Der Elektrolyt umfasst mindestens ein Lösungsmittel aus der Gruppe mit Acetonitril (AN), Propylencarbonat (PC), Tetrahydrofuran (THF), Dimethylcarbonat (DMC), Diethylcarbonat (DEC), Ethylmethylcarbonat (EMC), Ethylencarbonat (EC), Vinylcarbonat (VC) und Fluoroethylencarbonat (FEC).
b. In dem Elektrolyten gelöst ist mindestens eine Verbindung aus der Gruppe mit Fluoromethan (FM), Difluoromethan (DFM), Fluoroethan (FE), 1,1-Difluoroethan (1,1-DFE), 1,1,1,2-Tetrafluoroethan (1,1,1,2-TFE), und 2-Fluoropropan (2-FP).
c. Der Elektrolyt umfasst Lithium-bis-(trifluoromethan)sulfonylimid (LiTFSI) als Leitsalz.
d. Das Leitsalz ist in einer Konzentration von 0,5 bis 2,0 M, insbesondere von 1,2 M, in dem Elektrolyten enthalten.

Besonders bevorzugt sind die vier unmittelbar vorstehenden Merkmale a. bis d. in Kombination miteinander realisiert.

In einer sechsten, besonders bevorzugten Weiterbildung der zweiten, besonders bevorzugten Variante zeichnet sich das erfindungsgemäße Energiespeicherelement hinsichtlich des Elektrolyten durch mindestens eines der drei unmittelbar folgenden zusätzlichen Merkmale a. bis c. aus:
a. Der Elektrolyt umfasst mindestens ein Lösungsmittel aus der Gruppe mit Propylencarbonat (PC), Dimethoxyethan (DME), Acetonitril (AN), Dimethylsulfoxid (DMSO), Tetrahydrofuran (THF), Sulfolan (SL) und Ethylacetat (EA).
b. Der Elektrolyt umfasst ein Leitsalz in einem Anteil von 2,5 bis 6,0 Mol.
c. Das Leitsalz ist LiTFSI.

Besonders bevorzugt sind die drei unmittelbar vorstehenden Merkmale a. bis c. in Kombination miteinander realisiert.

### Bevorzugte strukturelle Eigenschaften der Elektroden und des Verbundkörpers

Der Verbundkörper des erfindungsgemäßen Energiespeicherelements ist bevorzugt aus 2 bis 1000 gestapelten Elektroden, besonders bevorzugt aus 10 bis 500 gestapelten Elektroden, insbesondere aus 20 bis 500 gestapelten Elektroden, gebildet.

Innerhalb des Verbundkörpers können die Elektroden Zellen mit der Sequenz "Anode / Separator / Kathode" oder "Anode / Festkörperelektrolyt / Kathode" bilden, wobei der Separator bzw. der Festelektrolyt die entgegengesetzt gepolten Elektroden räumlich voneinander trennt.

Innerhalb des Verbundkörpers sind gleich gepolte Elektroden bevorzugt identisch ausgebildet, insbesondere auch hinsichtlich ihrer Kapazität.

Bevorzugt zeichnet sich das erfindungsgemäße Energiespeicherelement durch mindestens eines der unmittelbar folgenden Merkmale a. und b. aus:
a. Die Elektroden sind polygonal ausgebildet, bevorzugt weisen sie einen rechteckigen Umfang auf.
b. Der Verbundkörper weist eine prismatische Form auf.

Besonders bevorzugt sind die beiden unmittelbar vorstehenden Merkmale a. und b. in Kombination miteinander realisiert.

Besonders bevorzugt sind die Elektroden rechteckig, beispielsweise quadratisch, ausgebildet. Auch eine hexagonale Form ist in einigen Ausführungsformen besonders bevorzugt. Der Verbundkörper aus den gestapelten rechteckigen Elektroden weist dazu korrespondierend bevorzugt eine quaderförmige, insbesondere eine kubische Geometrie auf.

Demgemäß umfasst der Verbundkörper in der Regel mindestens sechs Seiten. Die Seiten, aus denen die freien Randstreifen der Anodenstromkollektoren und die freien Randstreifen der Kathodenstromkollektoren herausragen, können gegenüberliegende Seiten des Verbundkörpers oder benachbarte Seiten des Verbundkörpers sein.

Bevorzugt weisen die Elektroden eine Dicke im Bereich von 1 µm bis 200 µm auf. Die Anoden sind dabei in einigen Ausführungsformen sehr viel dünner als die Kathoden ausgebildet, insbesondere wenn sie auf metallischem Lithium basieren oder wenn sie Anteile an insbesondere metallischem Silizium umfassen.

Wenn die Elektroden polygonal ausgebildet sind, so weisen sie bevorzugt Seitenlängen im Bereich von 0,5 cm bis 200 cm auf. Bei rechteckigen Elektroden sind gleichfalls Seitenlängen im Bereich von 0,5 cm bis 200 cm besonders bevorzugt.

Bevorzugt sind die Elektroden und der Separator oder der Festelektrolyt als flache, ebene Schichten ausgebildet.

Vorzugsweise umfasst jede der gestapelten Elektroden innerhalb des Verbundkörpers zwei Flachseiten, die durch mehrere Ränder, im Falle einer rechteckig ausgebildeten Elektrode beispielsweise durch zwei Längsränder und zwei Querränder, voneinander getrennt sind. Abgesehen von den endständigen Elektroden des Verbundkörpers, bei denen nur eine der Flachseiten in mittelbaren Kontakt mit einer benachbarten Elektrode treten kann, stehen die Flachseiten der Elektroden jeweils über einen Separator oder eine Schicht aus dem Festelektrolyten in Kontakt zu einer benachbarten Elektrode innerhalb des Verbundkörpers, wobei benachbarte Elektroden sich jeweils in ihrer Polarität unterscheiden. Die über den Separator oder die Schicht aus dem Festelektrolyten in Kontakt stehenden Flachseiten überlagern sich hierbei in einem Überlagerungsbereich, welcher dadurch definiert ist, dass innerhalb des Überlagerungsbereichs eine Gerade senkrecht durch eine der Flachseiten auch die andere Flachseite schneidet.

Bei identischer Größe und nicht versetzterAnordnung der gestapelten Elektroden innerhalb des Verbundkörpers entspricht die Größe des Überlagerungsbereichs exakt der Fläche der Flachseiten. Bevorzugt beträgt die Größe des Überlagerungsbereichs > 90 %, bevorzugt > 95 %, der Fläche der Flachseiten.

Die von dem Verbundkörper umfassten Separatoren sind bevorzugt etwas größer dimensioniert ist als die von ihnen separierten Elektroden. Bevorzugt werden die Seiten des Verbundkörpers von den Rändern des jeweiligen Separators gebildet, auch die Seiten, aus denen die freien Randstreifen der Anodenstromkollektoren und die freien Randstreifen der Kathodenstromkollektoren herausragen. Analoges gilt, wenn derVerbundkörper an Stelle von Separatoren die Schichten aus dem Festkörperelektrolyten umfasst.

Damit die freien Randstreifen der Anodenstromkollektoren der gestapelten Elektroden aus einer Seite des Verbundkörpers und die freien Randstreifen der Kathodenstromkollektoren aus einer anderen Seite des Verbundkörpers herausragen, können die Anoden und die Kathoden entsprechend ausgebildet und/oder innerhalb des Verbundkörpers in geeigneter Weise zueinander angeordnet werden. Beispielsweise können hierzu
- die Randstreifen entsprechend breit bemessen sein und/oder
- die Anoden und die Kathoden und gegebenenfalls auch die Separatoren innerhalb des Verbundkörpers versetzt zueinander angeordnet sein.

Innerhalb des Verbundkörpers werden die Elektroden bevorzugt derart angeordnet, dass die freien Randstreifen der Kathodenstromkollektoren alle aus einer der Seiten des Verbundkörpers austreten und die freien Randstreifen der Anodenstromkollektoren alle aus einer anderen der Seiten des Verbundkörpers austreten. Hierzu können Elektroden innerhalb des Stapels auch versetzt zueinander angeordnet sein.

Es ist besonders bevorzugt, dass die aus den Seiten des Verbundkörpers austretenden Ränder des Anodenstromkollektors und/oder des Kathodenstromkollektors nicht mehr als 5000 µm, bevorzugt nicht mehr als 3500 µm, aus den Seiten herausragen.

Besonders bevorzugt ragt der Rand des Anodenstromkollektors aus einer der Seiten des Verbundkörpers nicht mehr als 2500 µm, besonders bevorzugt nicht mehr als 1500 µm, heraus. Besonders bevorzugt ragt der Rand des Kathodenstromkollektors aus einer anderen Seite des Verbundkörpers nicht mehr als 3500 µm, besonders bevorzugt nicht mehr als 2500 µm, heraus.

Die Zahlenangaben zum Überstand des Anodenstromkollektors und/oder des Kathodenstromkollektors beziehen sich auf den freien Überstand, bevor die Seiten mit dem oder den Kontaktelement(en) in Kontakt gebracht werden. Beim Anschweißen oder Anlöten des Kontaktelements kann es zu Deformationen der Ränder der Stromkollektoren kommen.

Je geringer der freie Überstand gewählt wird, desto größer können die mit Elektrodenmaterial bedeckten Hauptbereiche der Stromkollektoren ausgebildet werden. Dies kann positiv zur Energiedichte des erfindungsgemäßen Energiespeicherelements beitragen.

Ein besonderer Vorteil der erfindungsgemäßen Energiespeicherelements liegt vor allem darin, dass es mit besonders hoher spezifische Energiedichte sowie mit besonders guten Entwärmungseigenschaften bereitgestellt werden kann, wie nachfolgend noch näher erläutert wird.

### Bevorzugte Eigenschaften des Kontaktelements / der Kontaktelemente

Das Konzept der Verschweißung der Ränder von Stromkollektoren mit Kontaktelementen ist grundsätzlich bereits aus der WO 2017/215900 A1 oder aus der JP 2004-119330 A bekannt, wenn es dort auch nur im Zusammenhang mit zylindrischen Rundzellen beschrieben ist. Die Verwendung von Kontaktelementen ermöglicht besonders hohe Strombelastbarkeiten und einen geringen Innenwiderstand. Bezüglich geeigneter Verfahren zur elektrischen Verbindung von Kontaktelementen mit den Rändern von Stromkollektoren wird daher auf den Inhalt der WO 2017/215900 A1 und der JP 2004-119330 Avollumfänglich Bezug genommen.

Besonders bevorzugt umfasst das erfindungsgemäße Energiespeicherelement zwei Kontaktelemente, von denen eines mit dem freien Rand des Anodenstromkollektors und das andere mit dem freien Rand des Kathodenstromkollektors in unmittelbarem Kontakt steht, wobei die Kontaktelemente und die damit in Kontakt stehenden Ränder jeweils durch Verschweißung oder Verlötung verbunden sind.

Bei der Herstellung klassischer Elektrodenstapel aus mehreren Zellen wird zur Vermeidung einer Kurzschlussgefahr darauf geachtet, dass an entgegengesetzt gepolte Stromkollektoren angebundene Ableiter nicht miteinander in Kontakt treten können. Da erfindungsgemäß die freien Randstreifen der Anodenstromkollektoren aus einer Seite des Verbundkörpers und die freien Randstreifen der Kathodenstromkollektoren aus einer anderen Seite des Verbundkörpers herausragen, ist die Gefahr eines Kurzschlusses in Folge eines direkten Kontakts entgegengesetzt gepolter Stromkollektoren bei dem erfindungsgemäßen Energiespeicherelement im Normalfall nicht gegeben.

Die Kontaktelemente dienen als zentraler Leiter für die Ströme, die beim Betrieb des Energiespeicherelements aus den Elektroden entnommen werden. Hierbei können die freien Randstreifen der Anodenstromkollektoren und der Kathodenstromkollektoren im Idealfall über ihre gesamte Länge an die Kontaktelemente angebunden werden. Eine solche elektrische Kontaktierung senkt den Innenwiderstand innerhalb des erfindungsgemäßen Energiespeicherelements signifikant. Die beschriebene Anordnung kann das Auftreten großer Ströme somit sehr gut abfangen. Mit minimiertem Innenwiderstand reduzieren sich thermische Verluste bei hohen Strömen. Zudem wird die Abfuhr thermischer Energie aus dem Verbundkörper begünstigt. Bei starken Belastungen tritt somit eine Erwärmung nicht lokal sondern gleichmäßig verteilt auf.

In einigen bevorzugten Ausführungsformen weist das erfindungsgemäße Energiespeicherelement mindestens eines der unmittelbar folgenden Merkmale a. und b. auf:
a. Als Kontaktelemente werden Metallbleche mit einer Dicke im Bereich von 50 µm bis 600 µm, bevorzugt 150 - 350 µm, eingesetzt.
b. Die Kontaktelemente, insbesondere die Metallbleche, bestehen aus legiertem oder unlegiertem Aluminium, Titan, Nickel oder Kupfer, oder aus Edelstahl (beispielsweise vom Typ 1.4303 oder 1.4304) oder aus vernickeltem Stahl.

Vorzugsweise sind die unmittelbar vorgenannten Merkmale a. und b. in Kombination miteinander realisiert.

Form und Dimension der Kontaktelemente, insbesondere der Metallbleche, sind bevorzugt an die Form und Dimension der Seiten des Verbundkörpers, aus denen die freien Randstreifen der Stromkollektoren angepasst. In bevorzugten Ausführungsformen sind die Kontaktelemente rechteckig ausgebildet. Sie lassen sich damit auch gut in ein Gehäuse mit einer prismatischen Grundform integrieren.

In einigen Ausführungsformen können Kontaktelemente, insbesondere Metallbleche, verwendet werden, die mindestens einen Schlitz und/oder mindestens eine Perforierung aufweisen. Diese dienen dazu, einer Verformung der Kontaktelemente bei der Herstellung der Schweiß- oder der Lötverbindungzu den freien Randstreifen der Stromkollektoren entgegenzuwirken. Auch können die Kontaktelemente Prägungen aufweisen, die am Ort der Verbindung einen besseren Materialkontakt bewirken sollen.

In besonders bevorzugten Ausführungsformen bestehen der Anodenstromkollektor und das daran geschweißte Kontaktelement, insbesondere das daran geschweißte oder gelötete Metallblech, beide aus dem gleichen Material. Dieses wird besonders bevorzugt aus der Gruppe mit Kupfer, Nickel, Titan, vernickeltem Stahl und Edelstahl gewählt.

In weiteren besonders bevorzugten Ausführungsformen bestehen der Kathodenstromkollektor und das daran geschweißte Kontaktelement, insbesondere das daran geschweißte oder gelötete Metallblech, beide aus dem gleichen Material. Dieses wird besonders bevorzugt aus der Gruppe mit legiertem oder unlegiertem Aluminium, Titan und Edelstahl (z.B. vom Typ 1.4404) gewählt.

Bevorzugt stehen die aus dem Verbundkörper herausragenden freien Randstreifen der Stromkollektoren der Länge nach in unmittelbarem Kontakt mit den jeweiligen Kontaktelementen. Dadurch ergibt sich vorzugsweise eine linienartige Kontaktzone zwischen den Kontaktelementen und den freien Randstreifen.

In bevorzugten Weiterbildungen zeichnet sich das erfindungsgemäße Energiespeicherelement somit durch mindestens eines der unmittelbar folgenden Merkmale a. bis c. aus:
a. Die freien Randstreifen der Anodenstromkollektoren stehen mit einem metallischen Kontaktelement, insbesondere dem Metallblech, bevorzugt der Länge nach in unmittelbarem Kontakt und sind mit diesem Kontaktelement, insbesondere diesem Metallblech, durch Verschweißung oder Verlötung verbunden, wobei zwischen den Randstreifen und dem metallischen Kontaktelement, insbesondere dem Metallblech, eine linienartige Kontaktzone besteht.
b. Die freien Randstreifen der Kathodenstromkollektoren stehen mit einem metallischen Kontaktelement, insbesondere einem Metallblech, bevorzugt der Länge nach in unmittelbarem Kontakt und sind mit diesem Kontaktelement, insbesondere diesem Metallblech, durch Verschweißung oder Verlötung verbunden, wobei zwischen den Randstreifen und dem metallischen Kontaktelement, insbesondere dem Metallblech, eine linienartige Kontaktzone besteht.
c. Die freien Randstreifen der Anodenstromkollektoren und/oder die freien Randstreifen der Kathodenstromkollektoren umfassen jeweils einen oder mehrere Abschnitte, die jeweils über ihre gesamte Länge über eine Schweißnaht oder über Verlötung durchgehend mit dem jeweiligen Kontaktelement, insbesondere dem jeweiligen Metallblech, verbunden sind.

Die unmittelbar vorstehenden Merkmale a. und b. können sowohl unabhängig voneinander als auch in Kombination realisiert sein. Bevorzugt sind die Merkmale a. und b. in beiden Fällen in Kombination mit dem unmittelbar vorstehenden Merkmal c. realisiert.

In besonders bevorzugten Ausführungsformen zeichnet sich das erfindungsgemäße Energiespeicherelement durch mindestens eines der folgenden Merkmale aus:
a. Es umfasst mindestens ein Kontaktelement, das ein L-förmiges Profil aufweist.
b. Es umfasst mindestens ein Kontaktelement, das ein U-förmiges Profil aufweist.
c. Das Kontaktelement weist einen abgewinkelten Befestigungsfortsatz auf.

Vorzugsweise sind die unmittelbar vorgenannten Merkmale a. und c. oder b. und c. miteinander kombiniert.

Bei Verwendung des Kontaktelements mit L-förmigem Profil kann die Kontaktierung herausragender Randstreifen der jeweiligen Stromkollektoren an zwei Seiten des Verbundkörpers erfolgen. Hierzu ist es natürlich zunächst erforderlich, dass die Elektroden des Verbundkörpers zwei Ränder umfassen, an denen ihre Stromkollektoren einen freien Randbereich aufweisen, der einer Verschweißung oder einer Verlötung zugänglich ist.

Bei einem U-förmigen Profil des Kontaktelements ist es in der Regel vorgesehen, dass die Kontaktierung der herausragenden Ränder der jeweiligen Stromkollektoren an drei Seiten des Verbundkörpers erfolgt. Der gegebenenfalls vorgesehene abgewinkelte Befestigungsfortsatz ist in erster Linie für eine Befestigung des Kontaktelements an dem Gehäuse der Energiespeicherelements vorgesehen, sofern das Kontaktelement nicht selbst Teil des Gehäuses ist. Weiterhin kann der Befestigungsfortsatz auch Teil eines L-förmigen oder U-förmigen Profils sein und beispielsweise auch zur Anbringung eines Polbolzens dienen.

Je mehr Seiten des Verbundkörpers mit Kontaktelementen versehen sind, desto besser sind die Entwärmungseigenschaften des erfindungsgemäßen Energiespeicherelements.

In einigen bevorzugten Ausgestaltungen sind zwei Kontaktelemente mit jeweils einem L-förmigen Profil vorgesehen, wobei eines der Kontaktelemente zur elektrischen Kontaktierung der Anoden des Verbundkörpers und das andere Kontaktelement zur elektrischen Kontaktierung der Kathoden des Verbundkörpers vorgesehen sind.

In bevorzugten Ausführungsformen des erfindungsgemäßen Energiespeicherelements kann eines der folgenden Merkmale realisiert sein:
a. Als Kontaktelement dient eine Wand des prismatischen Gehäuses.
b. Das Kontaktelement ist mit dem Gehäuse elektrisch verbunden.

Die Realisierung des unmittelbar vorstehenden Merkmals a. kann besonders vorteilhaft sein. Während ein separates Kontaktelement zusätzlich entweder elektrisch mit dem Gehäuse verbunden werden muss oder aber mit dem Pol einer Poldurchführung, der gegen das Gehäuse isoliert ist, erübrigt sich dies, wenn man die freien Randstreifen der Stromkollektoren unmittelbar an das Gehäuse ankoppelt. Zum einen können die in dem Verbundkörper gestapelt vorliegenden Elektroden noch besser entwärmt werden. Zum anderen vergrößert sich durch den Wegfall eines separaten Ableiters der im Gehäuse für Aktivmaterial nutzbare Innenraum, was zu einer Steigerung der Kapazität genutzt werden kann.

Grundsätzlich können die unmittelbar vorgenannten Merkmale a. und b. miteinander kombiniert werden. So kann das Energiespeicherelement ein separates Kontaktelement umfassen, das beispielswese mit den freien Randstreifen der Kathodenstromkollektoren verschweißt oder verlötet ist, während die freien Randstreifen der Anodenstromkollektoren unmittelbar an eine Wand des Gehäuses geschweißt oder gelötet sind. Bevorzugte Ausgestaltung des Gehäuses, insbesondere auch als Kontaktelemente fungierender Wände des Gehäuses, ergeben sich aus den weiter unten angeführten Erläuterungen.

In weiteren bevorzugten Ausführungsformen des erfindungsgemäßen Energiespeicherelements kann das folgende Merkmal realisiert sein:
a. Das Gehäuse weist mindestens eine Poldurchführung auf, wobei die Poldurchführung mit dem Kontaktelement in Kontakt steht.

Wenn alle Stromkollektoren einer Polarität elektrisch mit dem Gehäuse und alle Stromkollektoren entgegengesetzter Polarität elektrisch mit einem Kontaktelement verbunden sind, so kann das Kontaktelement mit einem elektrischen Leiter einer Poldurchführung, beispielsweise einem Polbolzen oder einem Polstift, verbunden werden, der aus dem Gehäuse herausgeführt ist. Dabei ist vorzugsweise ein elektrischen Isolator vorgesehen, der einen elektrischen Kontakt des Gehäuses mit dem elektrischen Leiter der Poldurchführung unterbindet. Bei dem elektrischen Isolator kann es sich beispielsweise um ein Glas oder um einen keramischen Werkstoff oder um einen Kunststoff handeln.

In anderen Ausführungsformen kann das Kontaktelement unmittelbar an das Gehäuse angeschweißt werden.

### Bevorzugte Ausgestaltungen des Gehäuses

Das prismatische Gehäuse des erfindungsgemäßen Energiespeicherelements umschließt den Verbundkörper bevorzugt gas- und/oder flüssigkeitsdicht. Es wird bevorzugt aus zwei oder mehr metallischen Gehäuseteilen gebildet, beispielsweise wie es in der EP 3 117 471 B1 beschrieben ist. Die Gehäuseteile können beispielsweise durch Verschweißung miteinander verbunden werden.

Das Gehäuse umfasst vorzugsweise mehrere rechteckige Seitenwände sowie einen polygonalen, insbesondere rechteckigen Boden und ein polygonales, insbesondere rechteckiges Oberteil. Insbesondere das Oberteil und der Boden können als Kontaktelemente, bevorzugt als Kontaktplatten, dienen.

In einer ersten, besonders bevorzugten Variante zeichnet sich das Gehäuse des erfindungsgemäßen Energiespeicherelements durch mindestens eines der unmittelbar folgenden Merkmale a. und b., besonders bevorzugt durch eine Kombination der beiden Merkmale, aus:
a. Das Gehäuse umfasst ein erstes Gehäuseteil mit einem Boden und mehreren Seitenwänden und einer Öffnung sowie ein zweites Gehäuseteil, mit dem die Öffnung verschlossen ist.
b. Das Kontaktelement, insbesondere die Kontaktplatte, ist der Boden des ersten Gehäuseteils.

In dieser Ausführungsform sind also entweder die freien Randstreifen der Anodenstromkollektoren oder die freien Randstreifen der Kathodenstromkollektoren durch Verschweißung oder Verlötung mit dem Boden des ersten Gehäuseteils verbunden.

In einer zweiten, besonders bevorzugten Variante zeichnet sich das Gehäuse des erfindungsgemäßen Energiespeicherelements durch mindestens eines der unmittelbar folgenden Merkmale a. und b., besonders bevorzugt durch eine Kombination der beiden Merkmale, aus:
a. Das Gehäuse umfasst ein erstes Gehäuseteil mit einem Boden und mehreren Seitenwänden und einer Öffnung sowie ein zweites Gehäuseteil, mit dem die Öffnung verschlossen ist.
b. Das zweite Gehäuseteil ist das Kontaktelement.

In dieser Ausführungsform sind also entweder die freien Randstreifen der Anodenstromkollektoren oder die freien Randstreifen der Kathodenstromkollektoren durch Verschweißung oder Verlötung mit dem zweiten Gehäuseteil verbunden.

In beiden Varianten weist das erste Gehäuseteil bevorzugt einen rechteckigen Querschnitt auf und das zweite Gehäuseteil und der Boden des ersten Gehäuseteils sind bevorzugt rechteckig ausgebildet. Sowohl das erste als auch das zweite Gehäuseteil bestehen bevorzugt aus einem elektrisch leitenden Werkstoff, insbesondere aus einem metallischen Werkstoff. Die Gehäuseteile können z.B. unabhängig voneinander aus einem vernickelten Stahlblech oder aus legiertem oder unlegiertem Aluminium bestehen.

In einer bevorzugten Weiterbildung der ersten und der zweiten Variante zeichnet sich das erfindungsgemäße Energiespeicherelement durch die unmittelbar folgenden Merkmale a. bis e. aus:
a. Die freien Randstreifen der Anodenstromkollektoren oder die freien Randstreifen der Kathodenstromkollektoren sind durch Verschweißung oderVerlötung mit dem ersten Gehäuseteil verbunden.
b. Das Energiespeicherelement umfasst ein metallisches Kontaktelement, insbesondere eine metallische Kontaktplatte.
c. Die nicht mit dem ersten Gehäuseteil verbundenen Stromkollektoren sind mit dem Kontaktelement durch Verschweißung oder Verlötung verbunden.
d. Das ersten und das zweite Gehäuseteil sind durch Verschweißung oder Verlötung miteinander verbunden.
e. Das Kontaktelement ist an einen elektrischen Leiter angekoppelt, der aus dem Gehäuse herausgeführt ist, insbesondere durch eine Durchbrechung im zweiten Gehäuseteil.

Es ist besonders bevorzugt, dass die unmittelbar vorstehenden Merkmale a. bis e. in Kombination miteinander verwirklicht sind.

In einer weiteren bevorzugten Weiterbildung der ersten und der zweiten Variante zeichnet sich das erfindungsgemäße Energiespeicherelementdurch die unmittelbarfolgenden Merkmale a. bis e. aus:
a. Die freien Randstreifen der Anodenstromkollektoren oder die freien Randstreifen der Kathodenstromkollektoren sind durch Verschweißung oder Verlötung mit dem zweiten Gehäuseteil verbunden.
b. Das Energiespeicherelement umfasst ein metallisches Kontaktelement, insbesondere eine metallische Kontaktplatte.
c. Die nicht mit dem ersten Gehäuseteil verbundenen Stromkollektoren sind mit dem Kontaktelement durch Verschweißung oder Verlötung verbunden.
d. Das ersten und das zweite Gehäuseteil sind durch Verschweißung oder Verlötung miteinander verbunden.
e. Das Kontaktelement ist an einen elektrischen Leiter angekoppelt, der aus dem Gehäuse herausgeführt ist, insbesondere durch eine Durchbrechung im ersten Gehäuseteil.

Es ist besonders bevorzugt, dass die unmittelbar vorstehenden Merkmale a. bis e. in Kombination miteinander verwirklicht sind.

In diesen Weiterbildungen sind die Gehäuseteile elektrisch miteinander verbunden.

In einer dritten bevorzugten Variante zeichnet sich das Gehäuse des erfindungsgemäßen Energiespeicherelements durch mindestens eines der unmittelbar folgenden Merkmale a. und b., besonders bevorzugt durch eine Kombination der beiden Merkmale, aus:
a. Das Gehäuse umfasst ein rohrförmiges erstes Gehäuseteil mit zwei endständigen Öffnungen, ein zweites Gehäuseteil, das eine der Öffnungen verschließt, und ein drittes Gehäuseteil, das die andere der Öffnungen verschließt.
b. Das Kontaktelement, insbesondere die Kontaktplatte, ist das zweite Gehäuseteil und/oder das dritte Gehäuseteil.

Auch in dieser Variante ist das Gehäuse der Zelle prismatisch ausgebildet. Das rohrförmige erste Gehäuseteil weist bevorzugt einen polygonalen, insbesondere einen rechteckigen oder hexagonalen Querschnitt auf und das zweite und dritte Gehäuseteil sind entsprechend bevorzugt gleichfalls polygonal, insbesondere rechteckig oder hexagonal ausgebildet. Bevorzugt sind die drei Gehäuseteile durch Verschweißung oder Verlötung miteinander verbunden. Sie weisen somit elektrisch bevorzugt die gleiche Polarität auf.

In einer bevorzugten Weiterbildung dieser Variante sind die freien Randstreifen der Anodenstromkollektoren oder die freien Randstreifen der Kathodenstromkollektoren durch Verschweißung oder Verlötung mit dem zweiten Gehäuseteil verbunden. Die nicht mit dem zweiten Gehäuseteil verbundenen Stromkollektoren sind mit einem separaten Kontaktelement durch Verschweißung oder Verlötung verbunden. Das Kontaktelement ist an einen elektrischen Leiter angekoppelt, der aus dem Gehäuse herausgeführt ist, insbesondere durch eine Durchbrechung im ersten oder im dritten Gehäuseteil.

Sowohl das erste als auch das zweite Gehäuseteil und gegebenenfalls das dritte Gehäuseteil bestehen bevorzugt aus einem elektrisch leitenden Werkstoff, insbesondere aus einem metallischen Werkstoff. Die Gehäuseteile können z.B. aus einem vernickelten Stahlblech, aus Edelstahl (beispielsweise vom Typ 1.4303 oder 1.4304), aus Kupfer, aus vernickeltem Kupfer oder aus legiertem oder unlegiertem Aluminium bestehen. Es kann auch bevorzugt sein, dass mit der Kathode elektrisch verbundene Gehäuseteile aus Aluminium oder aus einer Aluminiumlegierung und mit der Anode elektrisch verbundene Gehäuseteile aus Kupfer oder einer Kupferlegierung oder aus vernickeltem Kupfer bestehen.

Ein großer Vorteit dieser Variante ist, dass zur Bildung des Gehäuses keine durch vorgeschaltete Umform- und/oder Gießvorgänge herzustellende Gehäuseteile benötigt werden. Als Ausgangspunkt dient stattdessen besagtes rohrförmiges erstes Gehäuseteil mit polygonalem Querschnitt.

Die prismatischen Gehäuse gemäß der vorstehenden Beschreibung können besonders gut von prismatischen Verbund körpern ausgefüllt werden. Die gestapelten Elektroden des Verbundkörpers weisen zu diesem Zweck besonders bevorzugt eine im Wesentlichen rechteckige Grundform auf.

Bei den Gehäuseteilen handelt es sich bevorzugt um Blechteile mit einer Dicke im Bereich von 50 µm bis 600 µm, bevorzugt im Bereich von 150 - 350 µm. Die Blechteile bestehen wiederum bevorzugt aus legiertem oder unlegiertem Aluminium, Titan, Nickel oder Kupfer, gegebenenfalls auch aus Edelstahl (beispielsweise vom Typ 1.4303 oder 1.4304) oder aus vernickeltem Stahl.

### Verschweißung oder Verlötung der Kontaktelemente mit den Stromkollektoren

Das KonzeptderVerschweißungder Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindungvon Kontaktelementen mit den Rändern von Stromkollektoren wird daher auf den Inhalt der WO 2017/215900 A1 und der JP 2004-119330 A vollumfänglich Bezug genommen.

Es gibt mehrere Möglichkeiten, wie die Kontaktelemente mit den Rändern der Stromkollektoren verbunden sein können.

Die Kontaktelemente können mit den Rändern entlang der erwähnten linienartigen Kontaktzonen über mindestens eine Schweißnaht verbunden sein. Die Ränder können also jeweils einen oder mehrere Abschnitte umfassen, die jeweils über ihre gesamte Länge über eine Schweißnaht durchgehend mit der oder den Kontaktelementen verbunden sind. Besonders bevorzugt weisen diese Abschnitte eine Mindestlänge von 5 mm, bevorzugt von 10 mm, besonders bevorzugt von 20 mm, auf.

In einer möglichen Weiterbildung erstrecken sich der oder die mit dem Kontaktelement über ihre gesamte Länge durchgehend verbundenen Abschnitte über mindestens 25 %, bevorzugt über mindestens 50 %, besonders bevorzugt über mindestens 75 %, der Gesamtlänge des jeweiligen Ränder der Stromkollektoren.

In einigen bevorzugten Ausführungsformen sind die Ränder über ihre gesamte Länge durchgehend mit dem Kontaktelement verschweißt.

In weiteren möglichen Ausführungsformen sind die Kontaktelemente mit den Rändern der Stromkollektoren über eine Mehrzahl oder Vielzahl von Schweißpunkten verbunden.

Das Verlöten der Ränder der Stromkollektoren mit einem Kontaktelement kann beispielsweise erfolgen, indem das Kontaktelement mit einer Beschichtung aus einem Lot bereitgestellt wird. Eine Lötverbindung kann erzeugt werden, indem die Ränder der Stromkollektoren und die Beschichtung aneinandergepresst werden und das Kontaktelement auf eine Temperatur erwärmt wird, die oberhalb der Schmelztemperatur des Lots liegt.

Als Lot bezeichnet man bekanntlich ein Mittel, das Metalle durch Löten verbindet. In der Regel handelt es sich dabei um eine Legierung unterschiedlicher Metalle. Besonders häufig werden Legierungen umfassend mindestens ein Metall aus der Gruppe mit Blei, Zinn, Zink, Silber und Kupfer verwendet.

### Lithium-Depot

Die Funktion einer Lithium-Ionen-Zelle basiert darauf, dass ausreichend mobile Lithiumionen (mobiles Lithium) zur Verfügung stehen, um durch Wanderung zwischen der Anode und der Kathode bzw. der negativen Elektrode und der positiven Elektrode den abgegriffenen elektrischen Strom auszugleichen. Unter mobilem Lithium ist zu verstehen, dass das Lithium für Ein- und Auslagerungsvorgänge in den Elektroden im Rahmen der Entlade- und Ladevorgänge der Lithium-Ionen-Zelle zur Verfügung steht oder hierfür aktiviert werden kann. Im Zuge der ablaufenden Entlade- und Ladeprozesse einer Lithium-Ionen-Zelle kommt es im Laufe der Zeit zu Verlusten an mobilem Lithium. Diese Verluste treten in Folge von verschiedenen, in der Regel nicht vermeidbaren Nebenreaktionen auf. Bereits im Rahmen des ersten Lade- und Entladezyklus einer Lithium-Ionen-Zelle kommt es zu Verlusten an mobilem Lithium. Bei diesem ersten Lade- und Entladezyklus bildet sich in der Regel eine Deckschicht auf der Oberfläche der elektrochemisch aktiven Komponenten an der negativen Elektrode. Diese Deckschicht wird als *Solid Electrolyte Interphase* (SEI) bezeichnet und besteht in der Regel vor allem aus Elektrolytzersetzungsprodukten sowie einer gewissen Menge an Lithium, das in dieser Schicht fest gebunden ist. Der mit diesem Vorgang verbundene Verlust an mobilem Lithium ist besonders stark bei Zellen, deren Anode Anteile an Silizium aufweist.

Um diese Verluste auszugleichen, zeichnet sich das erfindungsgemäße Energiespeicherelement in bevorzugten Ausführungsformen durch mindestens eines der unmittelbar folgenden Merkmale a. bis c. aus:
a. Das Energiespeicherelement umfasst Elektroden, die Lithium reversibel aufnehmen und abgeben können, einen organischen Elektrolyten, der ein Lithium-Leitsalz umfasst sowie ein nicht von den Elektroden oder dem Elektrolyten umfasstes Depot an Lithium oder einem lithiumhaltigen Material, mit dem Verluste an mobilem Lithium während des Betriebs des Energiespeicherelements ausgeglichen werden können.
b. Das Depot steht in Kontakt mit dem Elektrolyten.
c. Das Energiespeicherelement verfügt über mindestens einen elektrischen Leiter und gegebenenfalls zusätzlich über mindestens einen steuerbaren Schalter, über den oder die das Depot elektrisch mit mindestens einer der positiven oder mindestens einer der negativen Elektroden des Energiespeicherelements verbunden werden kann.

Es ist besonders bevorzugt, dass die unmittelbar vorstehenden Merkmale a. bis c. in Kombination miteinander verwirklicht sind.

Zweckmäßigerweise ist das Depot bevorzugt innerhalb des Gehäuses des erfindungsgemäßen Energiespeicherelements angeordnet.

Das elektrisch kontaktierbare Lithium-Depot ermöglicht es, den Elektroden bei Bedarf Lithium zuzuführen oder aber zur Vermeidung von Lithium-*Plating* überschüssiges Lithium aus den Elektroden abzuführen. Hierzu kann das Lithium-Depot über den mindestens einen elektrischen Leiter gegen die negativen oder gegen die positiven Elektroden geschaltet werden. Überschüssiges Lithium kann bei Bedarf dem Lithium-Depot zugeführt und dort abgelagert werden. Für diese Anwendungsfälle können Mittel vorgesehen sein, die ein separates Monitoring der Einzelpotentiale von Anoden und Kathoden und/oder eine externe Überwachung der Zellbalance über elektrochemische Analysen wie DVA (*differential voltage analysis*) ermöglichen.

Der elektrische Leiter und das damit verbundene Lithium-Depot sind zweckmäßigerweise gegen die positiven und die negativen Elektroden sowie damit elektrisch gekoppelten Komponenten elektrisch isoliert.

Bei dem Lithium oder dem lithiumhaltigen Material des Lithium-Depots kann es sich beispielsweise um metallisches Lithium, ein Lithium-Metall-Oxid, ein Lithium-Metall-Phosphat oder andere, dem Fachmann geläufige Materialien handeln.

### Sonstige bevorzugte Ausgestaltungen des Energiespeicherelements

In einigen besonders bevorzugten Ausführungsform ist das Gehäuse des Energiespeicherelements quaderförmig ausgebildet und zeichnet sich durch Seitenlängen im Bereich von 0,5 cm bis 200 cm aus.

Die Nennkapazität der Energiespeicherelements beträgt bevorzugt bis zu 100 Ah.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Weitere Merkmale der Erfindung sowie aus der Erfindung resultierende Vorteile ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein. Die nachfolgend beschriebenen Ausführungsbeispiele dienen lediglich zur Erläuterung und zum besseren Verständnis der Erfindung und sind in keiner Weise einschränkend zu verstehen.

### KURZBESCHREIBUNG DER ZEICHNUNGEN

In den Zeichnungen zeigen schematisch:
- Fig. 1 eine Aufsicht auf eine bevorzugte Ausführungsform eines Stromkollektors, der Bestandteil einer Elektrode des erfindungsgemäßen Energiespeicherelements sein kann,
- Fig. 2 eine geschnittene Ansicht des in Fig. 1 dargestellten Stromkollektors,
- Fig. 3 eine Aufsicht auf eine Anode, die den in Fig. 1 und Fig. 2 dargestellten Stromkollektor umfasst,
- Fig. 4 eine geschnittene Ansicht der in Fig. 3 dargestellten Anode,
- Fig. 5 eine Draufsicht auf eine unter Verwendung der in Fig. 3 dargestellten Anode gefertigte Zelle, die Bestandteil des Verbundkörpers des erfindungsgemäßen Energiespeicherelements sein kann,
- Fig. 6 eine geschnittene Ansicht der in Fig. 5 dargestellten Zelle,
- Fig. 7A eine Aufsicht auf eine bevorzugte Ausführungsform einer Anode des erfindungsgemäßen Energiespeicherelements, die eine rechteckige Grundfläche aufweist,
- Fig. 7B eine Aufsicht auf eine bevorzugte Ausführungsform einer Kathode des erfindungsgemäßen Energiespeicherelements, die eine rechteckige Grundfläche aufweist,
- Fig. 7C eine Aufsicht auf einen Verbundkörper, welcher unter Verwendung der in Fig. 7A und in Fig. 7B dargestellten Elektroden gebildet wurde,
- Fig. 8 eine geschnittene Ansicht einer bevorzugten Ausführungsform eines Energiespeicherelements mit einem Gehäuse gemäß der obigen dritten bevorzugten Variante,
- Fig. 9 eine geschnittene Ansicht einer weiteren bevorzugten Ausführungsform eines Energiespeicherelements mit einem Gehäuse gemäß der obigen ersten bevorzugten Variante,
- Fig. 10 eine geschnittene Ansicht einer weiteren bevorzugten Ausführungsform eines Energiespeicherelements mit einem Gehäuse gemäß der obigen ersten bevorzugten Variante mit Details zum Aufbau der einzelnen Zellen.

### DETAILLIERTE BESCHREIBUNG DER AUSFÜHRUNGS BEISPIELE

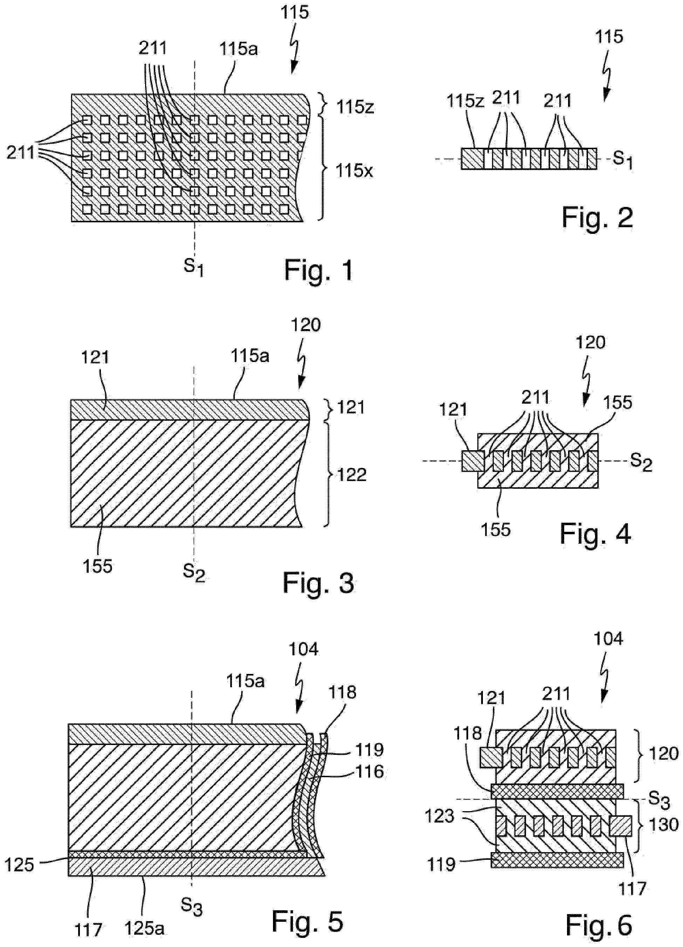

**Fig. 1** und **Fig. 2** veranschaulichen das Design eines Stromkollektors 115, der Bestandteil einer Elektrode eines erfindungsgemäßen Energiespeicherelements sein kann. Bei Fig. 2 handelt es sich um einen Schnitt entlang S1. Der Stromkollektor 115 umfasst eine Vielzahl Durchbrechungen 211, bei denen es sich um rechteckige Löcher handelt. Der Bereich 115x ist durch die Durchbrechungen 211 gekennzeichnet, wohingegen sich im Bereich 115z entlang des Längsrands 115a keine Durchbrechungen finden. Der Stromkollektor 115 weist daher im Bereich 115x ein deutlich geringeres Flächengewicht auf als im Bereich 115z.

**Fig. 3** und **Fig. 4** veranschaulichen eine Anode 120, die unter beidseitigem Auftrag eines negativen Elektrodenmaterials 155 auf den in Fig. 1 und Fig. 2 dargestellten Stromkollektor 115 gefertigt wurde. Bei Fig. 4 handelt es sich um einen Schnitt entlang S2. Der Stromkollektor 115 weist nun einen Hauptbereich 122 auf, der mit einer Schicht aus dem negativen Elektrodenmaterial 123 beladen ist, sowie einen freien Randstreifen 121, der sich entlang des Längsrands 115a erstreckt und der nicht mit dem Elektrodenmaterial 155 beladen ist. Das Elektrodenmaterial 155 befüllt darüber hinaus auch die Durchbrechungen 211.

**Fig. 5** und **Fig. 6** veranschaulichen den einfachsten Fall eines elektrochemischen Zelle 104, die unter Verwendung der in Fig. 3 und Fig. 4 dargestellten Anode 120 gefertigt wurde. Daneben umfasst sie die Kathode 130 und die Separatoren 118 und 119. Bei Fig. 6 handelt es sich um einen Schnitt entlang S3. Die Kathode 130 baut auf dem gleichen Strom kollektordesign auf wie die Anode 120. Bevorzugt unterscheiden sich die Stromkollektoren 115 und 125 von Anode 120 und Kathode 130 nur durch die jeweilige Materialauswahl. So umfasst der Stromkollektor 125 der Kathode 130 einen Hauptbereich 116, der mit einer Schicht aus positivem Elektrodenmaterial 123 beladen ist, sowie einen freien Randstreifen 117, dersich entlang des Längsrands 125a erstreckt und der nicht mit dem Elektrodenmaterial 123 beladen ist. Mit weiteren Elektroden und Separatoren kann die Zelle 104 zu einem Verbundkörper 105 aufgebaut werden, wie er in einem erfindungsgemäßen Energiespeicherelement 100 enthalten sein kann.

Die freien Randstreifen 117 und 121 sind in einigen bevorzugten Ausführungsformen beidseitig sowie zumindest bereichsweise mit einem elektrisch isolierenden Stützmaterial, beispielsweise mit einem keramischen Material wie Silizium- oder Aluminiumoxid, beschichtet. Der Kathodenstromkollektor 125 kann beispielsweise aus Aluminium und die Aktivmaterialbeschichtung 123 darauf kann beispielsweise aus NMCA (Lithium-Nickel-Mangan-Kobalt-Aluminiumoxid) gebildet sein. Der Anodenstromkollektor 115 kann beispielsweise aus Kupfer gebildet sein und die Aktivmaterialbeschichtung 155 darauf kann beispielsweise eine Mischung aus Graphit und Silizium sein.

Erwähnenswert ist, dass die Separatoren 118 und 119 in Abhängigkeit des verwendeten elektrochemischen Systems durch Schichten aus Festkörperelektrolyten ersetzt werden können.

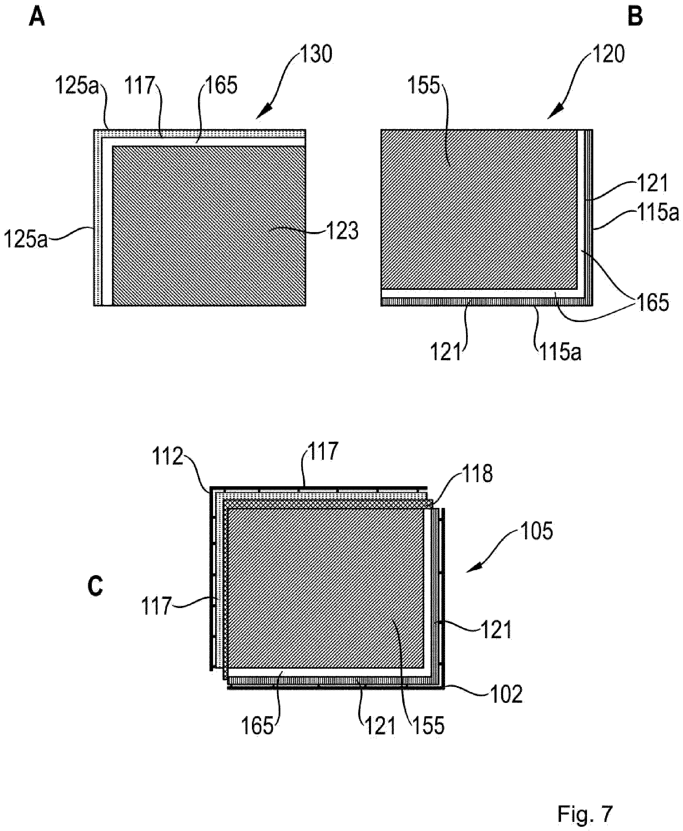

Die Fig. 7A, 7B und 7C illustrieren den Aufbau eines Verbundkörpers 105.

**Fig. 7A** zeigt eine Kathode 130 mit rechteckiger Grundform. Wie die in Fig. 6 dargestellte Kathode umfasst sie einen Kathodenstromkollektor, der in einem Hauptbereich 116 mit einem positiven Elektrodenmaterial 123 beschichtet ist, wobei entlang zwei benachbart liegenden Seiten der Kathode 130 ein Randstreifen 117 frei von dem Elektrodenmaterial 123 ist. In einem streifenförmigen Teilbereich des Randstreifens 117 ist allerdings eine keramische Beschichtung 165 als Stützmaterial vorgesehen. Die beiden Seitenränder 125a des Kathodenstromkollektors, entlang denen die keramische Beschichtung 165 aufgebracht ist, sind nicht von dem Stützmaterial bedeckt.

**Fig. 7B** zeigt eine Anode 120 mit rechteckiger Grundform. Wie die in Fig. 6 dargestellte Anode umfasst sie einen Anodenstromkollektor, der in einem Hauptbereich 122 mit einem negativen Elektrodenmaterial 155 beschichtet ist, wobei entlang zwei benachbart liegenden Seiten der Anode 120 ein Randstreifen 121 frei von dem Elektrodenmaterial 155 ist. In einem streifenförmigen Teilbereich des Randstreifens 121 ist gleichfalls eine keramische Beschichtung 165 als Stützmaterial vorgesehen. Die beiden Seitenränder 115a, entlangdenen die keramische Beschichtung 165 aufgebracht ist, sind allerdings nicht von dem Stützmaterial bedeckt.

**Fig. 7C** zeigt einen Verbundkörper 105, der unter Verwendung der Anode 120 und der Kathode 130 gemäß Fig. 7A und Fig. 7B gebildet wurde. Die Anode 120 und der Kathode 130 sind die beiden obenliegenden Elektroden in dem Verbundkörper, darunter liegende weiter Elektroden sind in der Aufsicht nicht erkennbar. In dem Verbundkörper sind Elektroden gleicher Polarität jeweils identisch ausgebildet. Zwischen der Anode 120 und der Kathode 130 ist ein Separator 118 angeordnet.

Die Anode 120 und die Kathode 130 der Einzelzellen weisen jeweils die gleiche Größe auf. Sie sind jeweils leicht versetzt zueinander angeordnet, so dass an zwei benachbarten Seiten des Verbundkörpers die Ränder 125a des Kathodenstromkollektor und an zwei weiteren benachbarten Seiten des Verbundkörpers 105 die Ränder 115a des Anodenstromkollektor heraustreten. An diese Seiten sind die Kontaktelemente 102 und 112 geschweißt. Die beiden Kontaktelemente 102 und 112 weisen jeweils einen L-förmigen Querschnitt auf.

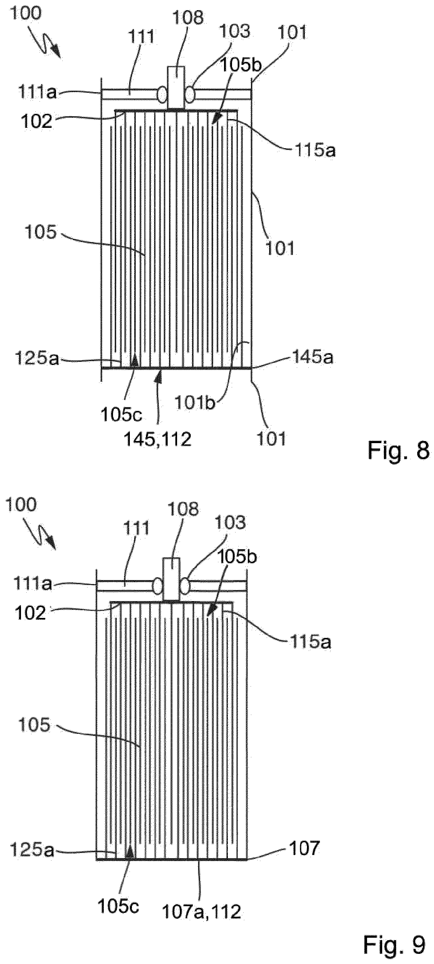

Die in **Fig. 8** dargestellte Energiespeicherelement 100 umfasst den prismatischen Verbundkörper 105, der sechs rechteckige Seiten aufweist und axial in das rohrförmig ausgebildete Gehäuseteil 101 eingeschoben ist, welches einen rechteckigen Querschnitt aufweist. Endständig weist das Gehäuseteil 101 zwei rechteckige Öffnungen auf, in die das rechteckige Gehäuseteil 111 und das rechteckige Gehäuseteil 145 eingesetzt sind. Die Gehäuseteile 111 und 145 bestehen idealerweise beide ganz oder teilweise aus Metall. Die Ränder 111a und 145a der Gehäuseteile 111 und 145 sind mit dem Gehäuseteil 101 durch Verschweißung verbunden, so dass die Gehäuseteile 101, 110 und 145 ein flüssigkeitsdichtes Gehäuse bilden.

Der Verbundkörper 105 ist aus einer Mehrzahl von rechteckigen Elektroden gebildet. Die Elektroden umfassen jeweils einen Stromkollektor, wobei die Stromkollektoren der negativen Elektroden mit einer Schicht aus einem negativen Elektrodenmaterial beladen sind und die Stromkollektoren der positiven Elektroden mit einer Schicht aus einem positiven Elektrodenmaterial beladen sind. Aus der hier obenliegenden Seite 105b des Verbundkörpers 105 treten die Längsränder 115a der Anodenstromkollektoren aus. Aus der untenliegenden Seite 105c des Verbundkörpers 105 treten die Längsränder 125a der Kathodenstromkollektoren aus.

Unmittelbar auf den Längsrändern 115a der Anodenstromkollektoren liegt ein Metallblech auf, das als Kontaktelement 102 dient. Es ist mit den Längsrändern 115a durch Verschweißung verbunden.

Das Energiespeicherelement 100 umfasst weiterhin den metallischen Polstift 108, der an das Kontaktelement 102 geschweißt und durch eine zentrale Durchbrechung im Gehäuseteil 111 aus dem Gehäuse des Energiespeicherelements 100 herausgeführt ist. Der Polstift 108 ist mittels des Isoliermittels 103 gegen das Gehäuseteil 111 elektrisch isoliert.

An der innenliegenden (oberen) Seite des Gehäuseteils 145 liegt der Längsrand 125a des Kathodenstromkollektors unmittelbar an. Der Längsrand 125a ist mit dem Gehäuseteil 145 durch Verschweißungverbunden. Die Verschweißung kann beispielsweise mittels eines Lasers durch das Gehäuseteil 145 hindurch bewirkt werden. Das Gehäuseteil 145 fungiert hier als zweites Kontaktelement 112.

Die in **Fig. 9** dargestellte Energiespeicherelement 100 umfasst den prismatischen Verbundkörper 105, der sechs rechteckige Seiten aufweist und axial in das Gehäuseteil 107 eingeschoben ist. Das Gehäuseteil 107 umfasst den rechteckig ausgebildeten Boden 107a und weist einen rechteckigen Querschnitt auf. Am oberen Ende weist das Gehäuseteil 107 eine rechteckige Öffnung auf, in die das rechteckige Gehäuseteil 111 eingesetzt ist. Die Gehäuseteile 107 und 111 bestehen idealerweise beide ganz oder teilweise aus Metall. Der Rand 111a des Gehäuseteils 111 ist mit dem Gehäuseteil 107 durch Verschweißung verbunden, so dass die Gehäuseteile 107 und 111 ein flüssigkeitsdichtes Gehäuse bilden.

Der Verbundkörper 105 ist aus einer Mehrzahl von Zellen aus rechteckigen Elektroden gebildet. Die Elektroden umfassen jeweils einen Stromkollektor, wobei die Stromkollektoren der negativen Elektroden mit einer Schicht aus einem negativen Elektrodenmaterial beladen sind und die Stromkollektoren der positiven Elektroden mit einer Schicht aus einem positiven Elektrodenmaterial beladen sind. Aus der hier obenliegenden Seite 105b des Verbundkörpers 105 treten die Längsränder 115a der Anodenstromkollektoren aus. Aus der untenliegenden Seite 105c des Verbundkörpers 105 treten die Längsränder 125a der Kathodenstromkollektoren aus.

Unmittelbar auf den Längsrändern 115a der Anodenstromkollektoren liegt ein Metallblech auf, das als Kontaktelement 102 dient. Es ist mit den Längsrändern 115a durch Verschweißung verbunden.

Das Energiespeicherelement 100 umfasst weiterhin den metallischen Polstift 108, der an das Kontaktelement 102 geschweißt und durch eine zentrale Durchbrechung im Gehäuseteil 111 aus dem Gehäuse des Energiespeicherelements 100 herausgeführt ist. Der Polstift 108 ist mittels des Isoliermittels 103 gegen das Gehäuseteil 111 elektrisch isoliert.

An der innenliegenden (oberen) Seite des Bodens 107a liegt der Längsrand 125a des Kathodenstromkollektors unmittelbar an. Der Längsrand 125a ist mit dem Boden 107a durch Verschweißung verbunden. Die Verschweißung kann beispielsweise mittels eines Lasers durch den Boden 107a hindurch bewirkt werden. Der Boden 107a fungiert hier als zweites Kontaktelement 112.

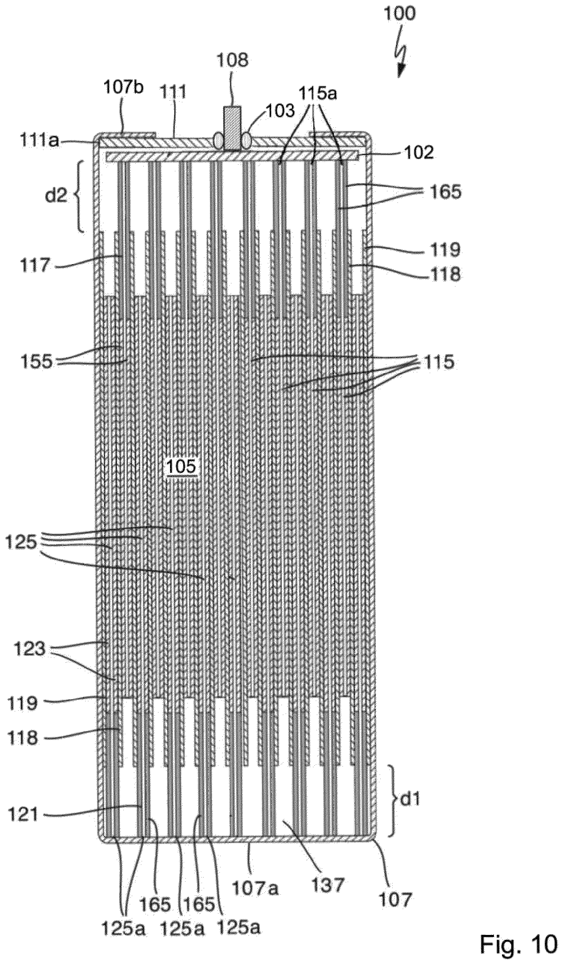

Das in **Fig. 10** dargestellte Energiespeicherelement 100 umfasst ein Gehäuseteil 107, das einen rechteckigen Boden 107a umfasst und einen rechteckigen Querschnitt aufweist, sowie eine kreisförmige Öffnung (definiert durch den Rand 101a). Bei dem Gehäuseteil 107 handelt es sich um ein Tiefziehteil. Am oberen Ende weist das Gehäuseteil 107 eine rechteckige Öffnung auf, in die das rechteckige Gehäuseteil 111 eingesetzt ist. Die Gehäuseteile 107 und 111 bestehen idealerweise beide ganz oder teilweise aus Metall. Der Rand 111a des Gehäuseteils 111 ist mit dem Gehäuseteil 107 durch Verschweißung verbunden, so dass die Gehäuseteile 107 und 111 ein flüssigkeitsdichtes Gehäuse bilden. Der Rand 107a des Gehäuseteils 101 ist um ca. 90° nach innen über den Rand 111a des Gehäuseteils 111 umgebogen. Das Gehäuseteil 107 schließt gemeinsam mit dem Gehäuseteil 111 einen Innenraum 137 ein, in dem der Verbundkörper 105 angeordnet ist.

Der prismatische Verbundkörper 105 weist sechs rechteckige Seiten auf und ist aus einer Mehrzahl von rechteckigen Elektroden sowie Separatoren (beispielhaft die Separatoren 118 und 119) gebildet. Die Elektroden umfassen jeweils einen Stromkollektor. Die LängsränderderSeparatoren bilden zwei Seiten des Verbundkörpers 105, aus denen die Stromkollektoren (115 und 125) herausragen. Die entsprechenden Überstände sind mit d1 und d2 bezeichnet. Aus der hier obenliegenden Seite 105b des Verbundkörpers 105 treten die Längsränder 115a der Anodenstromkollektoren aus. Aus der untenliegenden Seite 105c des Verbundkörpers 105 treten die Längsränder 125a der Kathodenstromkollektoren aus.

Die Anodenstromkollektoren 115 sind jeweils in einem Hauptbereich mit einer Schicht aus einem negativen Elektrodenmaterial 155 beladen. Die Kathodenstromkollektoren 125 sind jeweils in einem Hauptbereich mit einer Schicht aus einem positiven Elektrodenmaterial 123 beladen. Die Anodenstromkollektoren 115 weisen jeweils einen Randstreifen 121 auf, der sich entlang ihrer Längsränder 115a erstreckt und der nicht mit dem Elektrodenmaterial 155 beladen ist. Stattdessen ist hier jeweils eine Beschichtung 165 aus einem keramischen Stützmaterial aufgebracht, die die Stromkollektoren in diesem Bereich stabilisiert. Die Kathodenstromkollektoren 125 weisen jeweils einen Randstreifen 117 auf, der sich entlang ihrer Längsränder 125a erstreckt und der nicht mit dem Elektrodenmaterial 123 beladen ist. Stattdessen ist auch hier jeweils die Beschichtung 165 aus dem keramischen Stützmaterial aufgebracht.

Unmittelbar auf den Längsrändern 115a der Anodenstromkollektoren liegt ein Metallblech auf, das als Kontaktelement 102 dient. Es ist mit den Längsrändern 115a durch Verschweißung verbunden.

Das Energiespeicherelement 100 umfasst weiterhin den metallischen Polstift 108, der an das Kontaktelement 102 geschweißt und durch eine zentrale Durchbrechung im Gehäuseteil 111 aus dem Gehäuse des Energiespeicherelements 100 herausgeführt ist. Der Polstift 108 ist mittels des Isoliermittels 103 gegen das Gehäuseteil 111 elektrisch isoliert.

An der innenliegenden (oberen) Seite des Bodens 107a liegen die Längsränder 125a der Kathodenstromkollektoren unmittelbar an. Die Längsränder 125a sind mit dem Boden 107a durch Verschweißung verbunden. Die Verschweißung kann beispielsweise mittels eines Lasers durch den Boden 107a hindurch bewirkt werden. Der Boden 107a fungiert hier als zweites Kontaktelement 112.

Die positiven Elektroden, die vom Verbundkörper 105 umfasst sind, können beispielsweise 95 Gew.-% NMCA, 2 Gew.-% eines Elektrodenbinders und 3 Gew.-% Ruß als Leitmittel umfassen.

Die negativen Elektroden, die vom Verbundkörper 105 umfasst sind, können in bevorzugten Ausführungsformen beispielsweise 70 Gew.-% Silizium, 25 Gew.-% Graphit, 2 Gew.-% eines Elektrodenbinders und 3 Gew.-% Ruß als Leitmittel umfassen.

Als Elektrolyt kann beispielsweise eine 2 M Lösung von LiPF₆ in THF/mTHF (1:1) oder eine 1,5 M Lösung von LiPF₆ in FEC/EMC (3:7) mit 2 Gew.-% Vinylencarbonat (VC) eingesetzt werden.

Die Stromkollektoren und insbesondere die Anodenstromkollektoren 115 können eine Vielzahl von Durchbrechungen aufweisen. Hierbei kann es sich beispielsweise um eckige oder runde Löcher handeln. Vorzugsweise befinden sich die Durchbrechungen nur in den Bereichen der Stromkollektoren, die mit Aktivmaterial beschichtet sind. Die randständigen Bereiche, die nicht mit Aktivmaterial beschichtet sind, weisen vorzugsweise keine Durchbrechungen auf. Die Stromkollektoren sind daher in dem Bereich mit den Durchbrechungen durch ein deutlich geringeres Flächengewicht gekennzeichnet. Bei der Beschichtung der Stromkollektoren mit dem Aktivmaterial können sich die Aktivmaterialien auch in den Durchbrechungen ablagern und können daher in größeren Mengen aufgebracht werden.

## Patentansprüche

1. Energiespeicherelement (100) mit den Merkmalen:
a. Es umfasst eine Mehrzahl von Anoden (120) und Kathoden (130),
b. die Anoden (120) umfassen jeweils einen Anodenstromkollektor (115),
c. die Anodenstromkollektoren (115) weisen jeweils
• einen Hauptbereich, der mit einer Schicht aus negativem Elektrodenmaterial (155) beladen ist, sowie
• einen freien Randstreifen (121), der sich entlang eines Rands (110a) der Anodenstromkollektoren (110) erstreckt und der nicht mit dem negativen Elektrodenmaterial (155) beladen ist, auf,
d. die Kathoden (130) umfassen jeweils einen Kathodenstromkollektor (125),
e. die Kathodenstromkollektoren (125) weisen jeweils
• einen Hauptbereich, der mit einer Schicht aus positivem Elektrodenmaterial (123) beladen ist, sowie
• einen freien Randstreifen (117), der sich entlang eines Rands (125a) der Kathodenstromkollektoren (125) erstreckt und der nicht mit dem positiven Elektrodenmaterial (123) beladen ist, auf,
f. die Anoden (120) und Kathoden (130) liegen gestapelt vor und bilden einen Verbundkörper (105), wobei die Anoden (120) und die Kathoden (130) durch Separatoren (118, 119) oder Schichten aus einem Festkörperelektrolyten getrennt sind,
g. der Verbundkörper (105) ist von einem prismatischen Gehäuse umschlossen,
h. die freien Randstreifen (121) der Anodenstromkollektoren (115) ragen aus einer Seite des Verbundkörpers (105) und die freien Randstreifen (117) der Kathodenstromkollektoren (125) ragen aus einer anderen Seite des Verbundkörpers (105) heraus,
i. das Energiespeicherelement weist mindestens ein metallisches Kontaktelement (102, 112) auf, das mit den freien Randstreifen (117, 121) der Anodenstromkollektoren (115) und/oder der Kathodenstromkollektoren (125) durch Verschweißung oder Verlötung verbunden ist.

2. Energiespeicherelement nach Anspruch 1 mit mindestens einem derfolgenden zusätzlichen Merkmale:
a. Die Anoden (120) und Kathoden (130) sind polygonal ausgebildet, bevorzugt weisen sie einen rechteckigen Umfang auf.
b. Der Verbundkörper (105) weist eine prismatische Form auf.

3. Energiespeicherelement nach Anspruch 1 oder Anspruch 2 mit mindestens einem der folgenden Merkmale:
a. Es umfasst mindestens ein Kontaktelement (102, 112), das ein L-förmiges Profil aufweist.
b. Es umfasst mindestens ein Kontaktelement, das ein U-förmiges Profil aufweist.

4. Energiespeicherelement nach einem der vorhergehenden Ansprüche mit einem der folgenden Merkmale:
a. Als Kontaktelement (112) dient eine Wand des prismatischen Gehäuses.
b. Das Kontaktelement ist mit dem Gehäuse elektrisch verbunden.

5. Energiespeicherelement nach einem der vorhergehenden Ansprüche mit dem folgenden zusätzlichen Merkmal:
a. Das Gehäuse weist mindestens eine Poldurchführung (108) auf, wobei die Poldurchführung mit dem Kontaktelement (102) elektrisch verbunden ist.

6. Energiespeicherelement nach einem der vorhergehenden Ansprüche mit dem folgenden zusätzlichen Merkmal:
a. Das Energiespeicherelement (100) umfasst zwischen den Anoden (120) und den Kathoden (130) einen Festkörperelektrolyten.

7. Energiespeicherelement nach einem der vorhergehenden Ansprüche mit dem folgenden zusätzlichen Merkmal:
a. Die freien Randstreifen (121) der Anodenstromkollektoren (115) und/oder die freien Randstreifen (117) der Kathodenstromkollektoren (125) sind mit einem Stützmaterial (165) beschichtet, das sich von dem auf dem jeweiligen Stromkollektor angeordneten Elektrodenmaterial (123, 155) unterscheidet.

8. Energiespeicherelement nach Anspruch 7 mit mindestens einem der folgenden zusätzlichen Merkmale:
a. Bei dem Stützmaterial (165) handelt es sich um ein nichtmetallisches Material.
b. Bei dem Stützmaterial (165) handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

9. Energiespeicherelement nach Anspruch 7 oder Anspruch 8 mit mindestens einem der folgenden zusätzlichen Merkmale:
a. Die freien Randstreifen (121) der Anodenstromkollektoren (115) und/oder die freien Randstreifen (117) der Kathodenstromkollektoren (125) umfassen jeweils einen ersten Teilbereich und einen zweiten Teilbereich, wobei der erste Teilbereich mit dem Stützmaterial (165) beschichtet ist, während der zweite Teilbereich unbeschichtet ist.
b. Der erste Teilbereich und der zweite Teilbereich weisen jeweils die Form einer Linie oder eines Streifens auf und verlaufen parallel zueinander.
c. Der erste Teilbereich ist zwischen dem Hauptbereich des Anodenstromkollektors (115) oder des Kathodenstromkollektors (125) und dem zweiten Teilbereich angeordnet.

10. Energiespeicherelement nach einem der Ansprüche 7 bis 9 mit dem folgenden zusätzlichen Merkmal:
a. Der freie Randstreifen (121) des Anodenstromkollektors (115) und/oder der freie Randstreifen (117) des Kathodenstromkollektors (125) ist bis hin zum ersten Rand des jeweiligen Stromkollektors mit dem Stützmaterial (165) beschichtet.

11. Energiespeicherelement nach einem der vorhergehenden Ansprüche mit dem folgenden zusätzlichen Merkmal:
a. Die Separatoren (118, 119) umfassen mindestens ein anorganisches Material, insbesondere ein keramisches Material, das ihre Widerstandsfähigkeit gegenüber thermischen Belastungen verbessert.

12. Energiespeicherelement nach Anspruch 11 mit dem folgenden zusätzlichen Merkmal:
a. Das mindestens eine anorganische Material ist als partikuläres Füllmaterial in den Separatoren (118, 119) enthalten.

13. Energiespeicherelement nach Anspruch 11 oder Anspruch 12 mit dem folgenden zusätzlichen Merkmal:
a. Das mindestens eine anorganische Material liegt als Beschichtung auf einer Oberfläche der Separatoren (118, 119) vor.

14. Energiespeicherelement nach einem der Ansprüche 11 bis 13 mit mindestens einem der folgenden zusätzlichen Merkmale:
a. Das mindestens eine anorganische Material ist oder umfasst ein elektrisch isolierendes Material.
b. Das mindestens eine anorganische Material ist oder umfasst mindestens ein Material aus der Gruppe mit keramischem Material, glaskeramischem Material und Glas.
c. Das mindestens eine anorganische Material ist oder umfasst ein Lithiumionen leitendes keramisches Material.
d. Das mindestens eine anorganische Material ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂) oder um Titancarbonitrid (TiCN).

15. Energiespeicherelement nach einem der Ansprüche 11 bis 14 mit mindestens einem der folgenden zusätzlichen Merkmale:
a. Die Separatoren (118, 119) umfassen das mindestens eine anorganische Material lediglich bereichsweise.
b. Die Separatoren (118, 119) weisen entlang mindestens eines ihrer Ränder einen Randstreifen auf, in dem sie das mindestens eine anorganische Material als Beschichtung und/oder als partikuläres Füllmaterial umfassen.
c. Die Separatoren (118, 119) weisen einen Hauptbereich auf, in dem sie frei von dem mindestens einen anorganischen Material sind.
